(19) **Europäisches Patentamt**

**European Patent Office**

**Office européen des brevets**

(11) **EP 1 049 190 A1**

(12) **EUROPEAN PATENT APPLICATION**
published in accordance with Art. 158(3) EPC

(43) Date of publication:
02.11.2000 Bulletin 2000/44

(51) Int. Cl.⁷: **H01M 10/54**

(21) Application number: **99949359.6**

(86) International application number:
**PCT/JP99/05830**

(22) Date of filing: **22.10.1999**

(87) International publication number:
**WO 00/25382 (04.05.2000 Gazette 2000/18)**

(84) Designated Contracting States:
AT BE CH CY DE DK ES FI FR GB GR IE IT LI LU
MC NL PT SE

(30) Priority: 27.10.1998 JP 30530198
04.11.1998 JP 31333798
11.12.1998 JP 35258298
11.12.1998 JP 35267598

(71) Applicant:
**Mitsui Mining & Smelting Co., Ltd**
**Tokyo (JP)**

(72) Inventors:
• **TATEIWA, Hironori,**
**Mitsui Min. & Smelt. Co. Ltd.**
**Ageo-shi, Saitama 362-0021 (JP)**

• **KAHATA, Minoru,**
**Mitsui Min. & Smelt. Co. Ltd.**
**Ageo-shi, Saitama 362-0021 (JP)**
• **EIWA, Hironori,**
**Mitsui Min. & Smelt. Co. Ltd.**
**Ageo-shi, Saitama 362-0021 (JP)**
• **TEIWA, Hironori,**
**Mitsui Min. & Smelt. Co. Ltd.**
**Ageo-shi, Saitama 362-0021 (JP)**

(74) Representative:
**Strehl Schübel-Hopf & Partner**
**Maximilianstrasse 54**
**80538 München (DE)**

(54) **METHOD AND SYSTEM FOR RECOVERING VALUABLE METAL FROM WASTE STORAGE BATTERY**

(57)    A process comprises a separating process to mechanically separate refuse secondary batteries and to separate them into a separated cathode material and a separated anode material, and a process to recover valent metals from the separated anode and the separated cathode material separated in the separating process is disclosed.

**FIG. 1**

EP 1 049 190 A1

## Description

Field of Invention

The present invention is related to a process for recovering valent metals from refuse secondary batteries, and more specifically to a process and a system for recovering valent metals in a state of high purity from refuse secondary batteries, which are safe, simple, and economically-advantageous.

Background Art

In the past, for secondary batteries used for electric cars, lithium ion secondary battery, nickel-hydrogen secondary battery, nickel-cadmium secondary battery, lead storage cell and the like have been recommended. However, lithium ion secondary battery and nickel-hydrogen battery are considered as promising ones in view of high power density, long durability and high energy density particularly when required for electric cars.

When using these batteries, great amount of refuse secondary batteries, which contain great amount of valent metals, such as hydrogen-occluded alloy (cathode active substance), nickel and cadmium, are resulted, thus requiring, recycling process to recover these valent metals from such refuse secondary batteries (dead batteries).

As the recycling process for the refuse secondary batteries, an example is disclosed in Japanese laid-open patent publication No. 9-117748, Japanese laid-open patent publication No. 9-117749, etc. The recycling process disclosed in those gazettes mentioned above is to recover various parts including plastics, metallic materials and cathode plates by breaking down the refuse secondary batteries mechanically and separating them.

Whereas, a process for separating and recovering anode materials and cathode materials from secondary batteries is disclosed in Japanese laid-open patent publications Nos. 10-189063, 10-211446, 10-211447, etc. This process is to subject anode powder material and cathode powder material obtained by separation of electrode materials, which are obtained by means of breaking down, cutting and by-wind-separation of refuse nickel-hydrogen secondary batteries, to laminar flow separation process by means of wet thin flow separation method. However, this recovering process involves complex process to break down and cut batteries, and the purity and recovery rate of valent metals finally obtainable are not sufficient.

In addition, in those disclosures, there is no disclosure on a definite process for recovering valent metal, such as nickel, from the cathode material.

Furthermore, when hydrogen-occluded alloy is used as a cathode active substance, though valent metals, such as nickel and cobalt, can be obtainable in high purity and high recovery rate from the separated cathode materials to a certain extent, whereas mesh metals (Mm), which is an alloy made of cerium, lanthanum and other rare earth elements or the like, cannot be obtainable in high purity and in high recovery rate.

Further, as a process to recover valent metals, such as nickel and cobalt, from refuse nickel-hydrogen secondary batteries, a process to recover Ni(-Co) metal by breaking down, crushing and sieving refuse nickel-hydrogen secondary batteries, separating the resulting product into crude plastic, iron, spumous nickel and fine particles part (nickel hydroxide, hydrogen-occluded alloy), separating nickel solution containing cobalt and complex sulfate of rare earth elements by dissolving the fine particles part in sulfuric acid containing alkali metals, removing impurities from the nickel solution containing cobalt, and subjecting the nickel solution to electrolysis. (See Japanese laid-open patent publication No. 9-082371).

However, in the process hereinabove, a process to recover valent metals from refuse nickel-hydrogen secondary batteries is too complicate to apply for practical operation, therefore more simple process for recovering valent metals has been desired.

Thus, it is an object of the present invention to provide a safe, simple and economically-advantageous process to recover valent metals from refuse secondary batteries in high purity and in high recovery rate.

Disclosure of the Invention

The first invention of the present invention is a process for recovering valent metals from secondary batteries, which is characterized in that the process is constituted by a separation process to mechanically separate refuse secondary batteries to obtain separated cathode material and separated anode material and a recovering process to recover valent metals from the separated cathode material and the separated anode material.

The second invention of the present invention is a recovering system for recovering valent metals from refuse secondary batteries, which is characterized in that the system is composed of a separating means to mechanically separate the refuse secondary batteries to obtain separated cathode material and separated anode material and a recovering means to recover valent metals from the separated cathode material and the separated anode material.

In the first invention, the separating process may be constituted by a cooling process to refrigerate the refuse secondary batteries with liquid nitrogen and a crushing process to crush the refrigerated secondary batteries, thereby recovering valent metals from the crushed product.

Alternatively, the first invention may be constituted by including a water rinsing process to rinse the crushed product obtained in the crushing process described above and a first sieving process to sieve the rinsed product.

Moreover, a second sieving process to further sieve a component sieved down in the first sieving process, a second crushing process to crush the component remained over a sieve in the first sieving process and a third sieving process to sieve the crushed product in the second crushing process may be included in the recovering process specified in the first invention described above.

Whereas, the sieved-down component obtained in the second sieving process may be mainly consisted of the separated cathode material.

Whereas, the separated cathode material described above may be mainly consisted of a hydrogen-occluded alloy.

Whereas, the recovering process specified in the first invention of the present invention may include a rubbing process to rub a mixture of a component remained over a sieve in the second sieving process and a component sieved down in the third sieving process, and a wet magnetic separation process to magnetically separate the crushed-product after subjected it to the rubbing process under wet condition.

Further, the component remained over a sieve in the third sieving process may be mainly consisted of iron scrap, and, in the wet magnetic separation process, the magnetic material may be a component mainly consisted of spumous nickel, and the non-magnetic material may be a component mainly consisted of nickel hydroxide.

In the second invention of the present invention, the separating means may include a cooling means to refrigerate refuse secondary batteries with liquid nitrogen and a crushing means to crush refrigerated-refuse secondary batteries, thereby recovering valent metals from the crushed product.

In the first invention, the recovering process may include a fusing process to fuse the cathode material separated in the separating process described above after adding calcium, thereby recovering valent metals.

The amount of the calcium to be added may be in a range of from 1 to 50 parts by weight based on 100 parts by weight of the cathode material.

The addition of the calcium may be done after the melting of the separated cathode material.

Whereas, the fusing process described above may be carried out by adding nickel as a starter metal into the cathode material.

Whereas, the fusing process may be carried out under an atmosphere of an inactive gas.

Whereas, the separated cathode material may be one prepared by crushing and separating the refuse secondary batteries after refrigerating them with liquid nitrogen during the mechanical separation process.

In the second invention of the present invention, the recovering system may include a fusing means to fuse the cathode material separated by the separating means described above after adding calcium, thereby recovering valent metals.

Whereas, in the first invention, the recovering process may include a oxidation process to oxidize the cathode material separated in the separating process described above at a low temperature.

And, the oxidation process may he carried out at a temperature lower than 300°C and at an oxygen concentration in a range of from 5 to 25%.

And, in the oxidation process, nickel hydroxide being an anode material may be added for adjusting the oxygen concentration.

Whereas, in the mechanical separation process, the separated cathode material may be the one prepared by crushing and separating the refuse secondary batteries after refrigerating them with liquid nitrogen.

Whereas, in the second invention, the recovering system may include an oxidation means to oxidize the cathode material separated by the separating means described above at a low temperature, thereby recovering valent metals.

Whereas, in the first invention, the recovering process may include a rare earth element removing process to remove rare earth elements by adding an acid in an amount of 0.1-2.5 times equivalent into a solution of rare earth elements based on the cathode material separated according to the separating process described above, a drying process to dry the cathode material obtained after removing the rare earth elements and a fusing process to fuse the dried cathode material and then to recover valent metals from the resulting melt.

In addition, an oxidation process to gradually oxidize the cathode material while giving bubbling of air into the aqueous solution may be included in a place prior to the drying process

Whereas, the fusing process may include a step of adding nickel as a starter metal into the raw material for the fusing.

Whereas, the separated cathode material may be one prepared by crushing and separating the refuse secondary batteries in the said mechanical separation process following to the refrigeration of such batteries with liquid nitrogen.

Whereas, in the second invention, the recovering system may include a rare earth elements removing process to remove rare earth elements by adding an acid in an amount of 0.1-2.5 times equivalent into a solution of rare earth elements based on the cathode material separated according to the separating process described above, a drying process to dry the cathode material obtained after removing the rare earth elements therefrom, and a fusing process to fuse the dried cathode material and then to recover valent metals from the resulting melt.

In the first invention, the recovering process may include a reduction fusing process to fuse under reduced condition the cathode material separated in the separation process described above after adding either carbon or plastic and a carbon-removing process to remove carbon contained in the valent metals by applying heat for causing oxidation under an oxidation atmosphere at either prior or subsequent step to the reduction fusing process, thereby recovering the valent metals.

And, the separated cathode material described above may contain refuse anode material and refuse sintered nickel.

Whereas, the carbon-removing process described above may be constituted by including a step for an addition of $CaF_2$.

Whereas, in the carbon-removing process, an oxidizing agent, either oxygen or nickel oxide, may be used.

Whereas, the separated cathode material described above may be one prepared by crushing and separating the refuse secondary batteries after refrigerating them with liquid nitrogen during the mechanical separation process.

Whereas, in the second invention, the recovering system may include a reduction fusing process to fuse the cathode material separated in the separation process described above under reduced condition after adding either carbon or plastic and a carbon-removing process to remove carbon contained in the valent metals by applying heat for causing oxidation in an oxidation atmosphere at either prior or subsequent process to the reduction fusing process, thereby recovering the valent metals.

In the said first invention, the refuse secondary batteries may be any of nickel-hydrogen secondary battery, refuse nickel-hydrogen secondary battery and nickel-cadmium secondary battery.

In the said first invention, the valent metals may be one being mainly consisted of hydrogen-occluded alloy, spumous nickel, nickel hydroxide and iron scrap.

In the said first invention, the recovering process for valent metals may be carried out under an atmosphere of an inactive gas.

Brief Explanation on Drawings

Fig. 1 is a process chart for illustrating a recovering process for recovering valent metals specified in the first embodiment of the present invention.

Fig. 2 is a process chart for illustrating a recovering process for recovering valent metals specified in the second embodiment of the present invention.

Fig. 3 is a process chart for illustrating a recovering process for recovering valent metals specified in the third embodiment of the present invention.

Fig. 4 is a process chart for illustrating another recovering process for recovering valent metals specified in the third embodiment of the present invention.

Fig. 5 is a process chart for illustrating a recovering process for recovering valent metals specified in the fourth embodiment of the present invention.

Fig. 6 is a process chart for illustrating a recovering process for recovering valent metals specified in the fifth embodiment of the present invention.

Fig. 7 is a process chart for illustrating another recovering process for recovering valent metals specified in the fifth embodiment of the present invention.

Fig. 8 is a process chart for illustrating an other type of the recovering process for recovering valent metals specified in the fifth embodiment of the present invention.

Fig. 9 is a process chart for illustrating one more different type of the recovering process for recovering valent metals specified in the fifth embodiment of the present invention.

Fig. 10 is a process chart for illustrating further different type of the recovering process for recovering valent metals specified in the fifth embodiment of the present invention.

Best Modes for Carrying Out the Invention

Now, the present invention is further explained with referring the attached drawings, however, the scope of the present invention should not be construed within the range described below.

[First Embodiment]

Now, the first embodiment for the recovering process of the present invention is explained in detail with referring the drawing shown below.

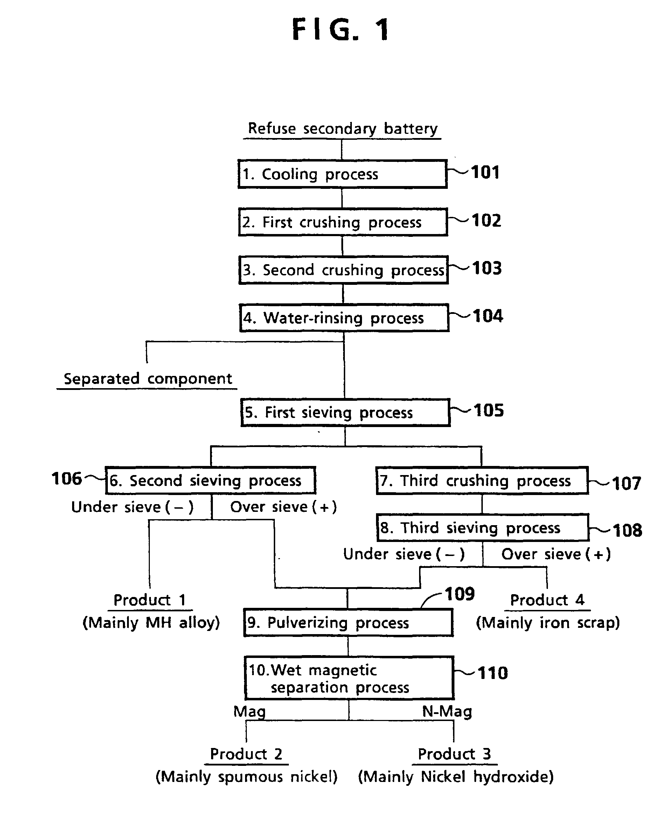

Fig. 1 is a process chart for showing the recovering process according to the first embodiment.

In this embodiment, valent metals can be recovered from the crushed refuse secondary batteries following to refrigeration of the refuse secondary batteries with liquid nitrogen and subsequent crushing thereof in the mechanical separation process.

According to this embodiment, safe, simple and economically-advantageous recovering of valent metals from the refuse secondary batteries in high purity and in high recovery rate can be achieved, since the recovering can be made by directly refrigerating the refuse secondary batteries at a fixed temperature and then directly crushing them, without cutting and separating the refuse secondary batteries into each components and cutting the each components in a way being done in the past.

In the present invention, there is no limitation in the type of said refuse secondary batteries, and any of lithium ion batteries, nickel-hydrogen secondary batteries, nickel-cadmium secondary batteries, etc. can be used, for example.

Particularly, refuse nickel-hydrogen batteries to be used for the batteries for hybrid-type electric cars (H-EV), which are expected to be produced in great numbers later, are considered as the most preferable object. The same expectation can be applied in the following embodiments.

The cathode material used for the nickel-hydrogen batteries contains hydrogen-occluded alloy in powder, nickel powder, etc. as the main components, and the anode material thereof is composed of sintered nickel hydroxide as the main component. The same can be applied in the embodiments described in the following.

The recovering system of the second embodiment to recover valent metals from the refuse secondary batteries is constituted by including a cooling means to refrigerate the refuse secondary batteries with liquid nitrogen and a crushing means to crush the refrigerated refuse secondary batteries, thereby recovering the valent metals from the said crushed product.

Now, the process for the recovering system for valent metals is explained in the following.

As shown in Fig. 1, the valent metals can be recovered from the refuse secondary batteries by passing the following processes from 1 to 10 without cutting and separating the refuse secondary batteries into the parts.

(1) First Process (Refrigeration process)

In the refrigerating process 101, refuse secondary batteries are placed into a cooling container to directly make them breakable at a low temperature.

For the refrigerating means, use of liquid nitrogen (-196°C) is the most preferable means, and the refuse secondary batteries can be transiently cooled by directly dipping them into liquid nitrogen. Cooling temperature by using the liquid nitrogen is - 200°C, and there is no limit in the time for the refrigeration, however, it is preferable to take the cooling time more than 5 min. to make the batteries breakable.

The use of liquid nitrogen for making the refuse secondary batteries at a low temperature is for corresponding to difficulty in the separation of each components contained in a case body under pressing condition at the subsequent crushing process and for aiming at securing safety in the operation.

(2) second Process (First Crushing Process)

The crushing process 102 is to crush the refuse secondary batteries having been breakable at a low temperature by using a biaxial low speed shearing crusher.

When crushing the batteries by using the crusher, it is necessary to put the refuse batteries in longitudinal direction to avoid cutting in the horizontal direction. This is because of that the active substance is rolled like a scroll.

As described above, the following advantages are given in the first process (Refrigerating process) and the second process (First crushing process).

① Less development of material mass are given at crushing.
② It is safe in view of explosion, heat generation, etc.
③ It is possible to reduce load given to the crusher.
④ Less rolling into the active substance caused by a separator can be attained.
⑤ Less stain due to alkaline electrolyte can be attained.

ⓖ Good exfoliation property of the active substance from a substrate can be given.

(3) Third Process (Second Crushing Process)

The second crushing process 103 is to further crush the refuse secondary batteries having been crushed in the first crushing process and being in frozen condition by using an uniaxial high speed shearing crusher.
This crushing is to break down materials, which are hard to separate from the case body and the crushed product in the first crushing process.
In this crushing, it is preferable to set the mesh size of the crusher to more or less 1 inch, since the hydrogen-occluded alloy may cause fire when the mesh size is too fine.

(4) Forth Process (Water-Rinsing Process)

The water-rinsing process 104 is to rinse the crushed batteries with water by using an underwater aeration separator to obtain a separated component.
The underwater aeration separator owns both function of mechanical stirring and aeration, it thereby allows to stir the secondary crushed product in water to dissolve the objective valent metals and to give washing under alkaline condition. After this process, the separated component aggregates around water surface by giving light aeration, which allows to facilitate the separation by using a skinmer, etc.

(5) Fifth Process (First Sieving Process)

The first sieving process 105 is to sieve under wet condition powdery components mainly consisting of hydrogen-occluded alloy and iron scrap mainly containing the case body. The mesh of the sieve should be set in a range of insomuch 1 mm ± 0.5.

(6) Sixth Process (Second Sieving Process)

The second sieving process 106 is to further sieve the separated-down component in powder obtained in the first sieving process and then to sieve it into a component mainly consisted of hydrogen-occluded alloy as a cathode material (Product 1) and another component part.
The hydrogen-occluded alloy is easily breakable and has a distribution in a range of finer sizes, therefore it can be sieved to a predetermined particle size under wet condition. In this embodiment, although the mesh of the sieve is set to insomuch 0.21 mm, it is preferable to use a finer mesh to obtain better hydrogen-occluded alloy in quality.

(7) Seventh Process (Third Crushing Process)

The third crushing process 107 is to crush the component (mainly consisted of iron scrap) remained over the sieve in the first sieving process by using a shock crusher.
This is because that the anode material still remains over the sieve in the first sieving process in a state being attaching onto the substrate of the battery. Therefore, this third crushing process is aiming at exfoliating the anode material from the substrate.

(8) Eighth Process (Third Sieving Process)

The third sieving process 108 is to sieve under wet condition the crushed product obtained in the process 7 described above to thereby obtain powder substance mainly consisting of the anode material and iron scraps.
In this process, the sieving is carried out through a sieve having a mesh being set to a size of insomuch as 1 mm, and iron scrap (Product 4) mainly containing the case body and the substrates is obtained over the sieve, and the separated anode material, whereto spumous nickel and nickel hydroxide are attached, is obtained under the sieve.

(9) Ninth Process (Pulverizing Process)

This pulverizing process 109 is to mix the component remained over a sieve in the second sieving process 106 and the component sieved down in the third sieving process 107, and then to subject the mixture to wet pulverization by using a ball mill to crush the spumous nickel, which is a valent metal, thereby separating the nickel hydroxide filled therein solely.

(10) Tenth Process (Wet Magnetic Separation Process)

The wet magnetic separation process 110 is to magnetically separate the spumous nickel as a strong magnetic element and the nickel hydroxide as a non-magnetic compound under wet condition to obtain a component (Product 2) mainly consisting of spumous nickel and a component (Product 3) mainly consisting of nickel hydroxide.

In the recovering process according to the present invention, the processes from 1 to 5 are the basic processes, and the processes from 6 to 10 can be appropriately combined with the basic processes.

For example, when the third process 103 (second sieving process) can be carried out successfully, it is allowed to omit the seventh process 107 (Third crushing process).

The present invention provides the following advantages based on the process to carry out crushing after making the battery materials breakable at a low temperature by using liquid nitrogen as described above.

① Though residual electricity may remain in the refuse secondary batteries, it is safe to take crushing process following to the refrigerating process of the batteries as no sparks or the like at the crushing will not be caused.

② Though an electrolyte contained in the batteries, which is normally composed of high concentrated alkaline liquid, is normally dangerous to handle, the inventive process gives safe condition as it carries out the operation according to a process under wet condition.

③ The mesh of the sieves is adjusted to a finer size in all of the sieving processes, thereby allowing to recover valent metals in a state of high purity from the batteries.

[Example 1]

Now, a preferable example definitely demonstrating the advantageous effect of the first embodiment, however, it should be noted that the scope of the present invention should not be limited to the description in this example.

In this example, valent metals were recovered from refuse secondary batteries according to the process shown in the process chart in Fig. 1.

The refuse secondary battery is nickel-hydrogen secondary battery, wherein hydrogen-occluded alloy is used as a cathode material, nickel hydroxide and spumous nickel are used as a anode active material, and iron is used for the case body and the substrate.

The refuse secondary batteries in a state that the six pieces being connected are inserted into a cooling container to directly dip them into liquid nitrogen for more than 5 min. (First process: Refrigerating process).

Then, by using a biaxial low temperature shearing crusher (Goodcutter UG2010-20-320, Manufactured by Ujiie Seisakusho Co.), the refuse secondary batteries were crushed following to the insertion of the batteries in longitudinal direction into the crusher (Second process: First crushing process)

Then, the refuse secondary batteries crushed in the first crushing process and being in frozen condition were crushed by using an uniaxial high speed shearing crusher (Third process: Second crushing process). In the second crushing process, a rather large mesh size, 1 inch, was employed.

Then, water-rinsing was conducted by using an underwater aeration separator to stir the component obtained in the second crushing process in water and to dissolve the objective valent metal, followed by washing with alkaline solution, thereby obtaining an objective separated component (Forth process: Water-rinsing process).

Then, sieving was carried out to separate the powder component mainly consisting of hydrogen-occluded alloy and iron scraps mainly containing the case body of the batteries under wet condition (Fifth process: First sieving process). In this sieving, the mesh size of the sieve was set to 1 mm. The powder component passed through the sieve in the first sieving process was further sieved under wet condition to obtain a component mainly consisting of hydrogen-occluded alloy (Product 1) and the other component (Sixth process: Second sieving process). In this sieving, the mesh size of the sieve was set to 0.21 mm.

Recovery results for the Product 1 obtained as described above are shown in Table 1 below.

Further, the analytical results by particle size on valent metals contained in the Product 1 are shown in Table 2 below.

Then, the component remained over a sieve in the first sieving process was crushed by using an impact crusher (Seventh process: Third crushing process)

The crushed component was then sieved with a sieve having 1 mm mesh under wet condition to separate into powder component mainly consisting of an anode material and iron scrap (Eighth process: Third sieving process).

After conducting the third sieving process, the iron scrap (Product 4), such as the case body and the substrate, were collected over the sieve, whereas anode material, whereto spumous nickel and nickel hydroxide are attached, was collected under the sieve.

Hereunder, recovery results for the Product 4 obtained above is shown in Table 1.

The component remained over a sieve in the second sieving process and the component sieved down in the third sieving process were mixed, and the resulting mixture was then subjected to wet pulverization by using a magnetic ball mill with a capacity of 1 liter to crush the spumous nickel, thereby separating the nickel hydroxide filled therein as simple substance (Ninth process: Pulverizing process).

After the pulverization described above, the crushed component was magnetically separated by wet magnetic separation using a stick magnet (3,000 Gauss) into spumous nickel as a strong magnetic substance and nickel hydroxide as a non-magnetic substance to obtain Product 2 and Product 3 (Tenth process: Wet magnetic separation process)

The recovery results for Product 2 and Product 3 obtained as described above are shown in Table 1.

The analytical results of the pulverized component by particle size and results of magnetic separation of the component passing through a sieve having less than 400 mesh are shown in Table 3. In the Table 3, MAG represents the component attached to the stick magnet after the wet magnetic separation, and N-MAG represents the component that did not attach to the stick magnet after the wet magnetic separation.

Table 1

| | | % by Weight | Content (%) | | | Component (%) | | | |
|---|---|---|---|---|---|---|---|---|---|
| | | | Ni | Fe | Ce | MH Com-ponent | Nickel hydro-xide | Spumous Nickel | Sub-strate |
| Product | 1 | 35.8 | 50.3 | 0.1 | 11.6 | 89.3 | 19.4 | 19.4 | 0.1 |
| | 2 | 22.5 | 78.2 | 1.6 | 1.0 | 4.7 | 31.3 | 80.4 | 1.3 |
| | 3 | 11.7 | 41.7 | 0.0 | 2.2 | 5.6 | 49.1 | 0.0 | 0.0 |
| | 4 | 30.0 | 7.0 | 92.0 | 0.1 | 0.4 | 0.2 | 0.3 | 98.5 |

Table 2

| | % by Weight | Ni | Fe | Ce | C |
|---|---|---|---|---|---|
| - 400 mesh | 65.1 | 48.3 | 0.21 | 13.6 | 1.14 |
| 400~325 | 8.1 | 49.6 | 0.21 | 13.8 | 0.90 |
| 325~250 | 7.0 | 52.2 | 0.34 | 11.7 | 1.08 |
| 250~100 | 14.3 | 56.7 | 0.41 | 8.5 | 0.93 |
| + 100 mesh | 5.5 | 61.9 | 0.43 | 5.2 | 0.75 |
| Total | 100.0 | 50.6 | 0.26 | 12.3 | 1.06 |

Table 3

| | % by Weight | Ni | Fe | Ce | C |
|---|---|---|---|---|---|
| + 250 mesh | 2.7 | 17.9 | 87.3 | 0.33 | 0.48 |
| 250~400 | 16.5 | 78.2 | 0.08 | 0.38 | 0.22 |
| - 400 MAG | 39.6 | 81.4 | 0.03 | 0.86 | 0.18 |
| - 400N-MAG | 41.2 | 56.2 | 0.06 | 1.31 | 0.45 |
| Total | 100.0 | 68.8 | 2.41 | 0.95 | 0.31 |

From the results shown in Table 1, it is demonstrated that Product 1 contains greater amount of nickel and cerium, which indicates that hydrogen-occluded alloy is mainly recovered. It is also indicated that spumous nickel is recovered as the main component from Product 2, nickel hydroxide is recovered as the main component from Product 3, and iron (the substrate) is recovered as the main from Product 4.

From the results shown in Table 2, it is noted that hydrogen-occluded alloy is collected in the component sieved down through a fine mesh (250 mesh) where a greater amount of cerium is contained. Therefore, in order to recover hydrogen-occluded alloy in high recovery rate, it is preferable to set the mesh size to 250 mesh in the sixth process, second sieving process.

From the results shown in Table 3, it is obvious that the iron scrap mainly consisting of the substrate is distributed in the component remained over the sieve of 250 mesh, whereas spumous nickel is crushed and is thereby distributed in the component sieved down through the sieve of 250 mesh, and that a great amount of nickel hydroxide is separated.

As described above, according to the recovering process of the present invention, it is understood that valent metals can be recovered from refuse secondary batteries in high purity and in high recovery rate safely, simply and economically-advantageously.

[Second Embodiment]

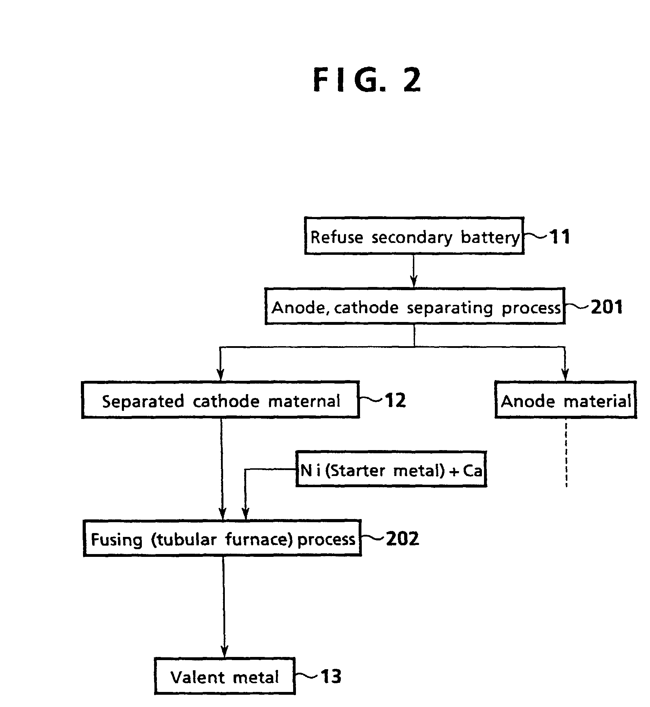

Fig. 2 is a process chart for explaining the recovering process according to the second embodiment.

As can be seen from Fig. 2, the recovering process of this embodiment is to recover the valent metals by subjecting the cathode material 12 separated by the mechanical separation process in the anode-cathode separation process 201 from the refuse secondary batteries 11 to the fusing process 202 after an addition of calcium, thereby recovering the valent metals 13 from the separated cathode material 12.

As shown in Fig. 2, the refuse secondary batteries are separated into the cathode material and the anode material by means of cutting, crushing, sieving, etc., according to the mechanical separation process described in the first embodiment and known mechanical process, for example, such process disclosed as in Japanese laid-open patent publication No. 9-117748. Such processes can be similarly applied to the embodiments described below.

In the separated cathode material from a nickel-hydrogen battery, not only the cathode material but also the anode material are contained at a content of approximately 20% by weight. For example, the anode material contains nickel in an amount of 68.7%, the cathode material contains nickel in an amount of 45.6% by weight and cerium in an amount of 14.6% by weight, and the separated cathode material contains nickel in an amount of 50.4% by weight and cerium in an amount of 12.0% by weight.

The anode material mainly contains nickel hydroxide, which gives adverse effect on the recovery rate of mesh metals or the like at recovering velant metals.

In the present embodiment, a cathode material with the composition as specified in Table 4 is used and it is subjected to the fusing process after an addition of calcium as shown in Fig. 2.

Namely, the cathode material, nickel as a starter metal and calcium for reduction are introduced into a tubular furnace and then subjected to the fusing process under an atmosphere using an inactive gas.

The fusing was continued for 2 hours at 1,500°C following to feeding of a cathode material in an amount of 10g, nickel in an amount of 30g and calcium in an amount of 1.0g into an aluminum-made crucible under argon gas flow at a rate of 0.5 1/min., for example. The content and recovery rate of the valent metals is shown in Table 4.

In the present embodiment, the addition of calcium during the fusing process for the separated cathode material is to improve the recovery rate for the mesh metals by means of removing the oxidized film of rare earth elements which covers the surface of hydrogen-occluded alloy by subjecting the oxidized film to calcium reduction.

The additional amount of calcium is preferably in a range of from 1 to 50 parts by weight based on 100 parts by weight of the cathode material. The additional effect may not be gained when this amount is less than 1% by weight, whereas no further additional effect may not be given even applying calcium in an amount more than 50 parts by weight.

In Table 5, contents and recovery rates for valent metals after subjecting the cathode material to the fusing process, where no calcium for reduction was applied into a tubular crucible for the comparison, are shown.

Table 4

| (Calcium-added) | | | | | | | |
|---|---|---|---|---|---|---|---|
| | | Ni | Co | La | Ce | Fe | Ca |
| Cathode material | Content (% by weight) | 51.50 | 8.37 | 8.10 | 11.94 | 0.22 | - |
| Valent material | Content (% by weight) | 93.80 | 2.13 | 1.60 | 2.34 | 0.067 | 0.003 |

Table 4 (continued)

| (Calcium-added) | | | | | | | |
|---|---|---|---|---|---|---|---|
| | | Ni | Co | La | Ce | Fe | Ca |
| Recovery rate (%) | | c.a. 100 | 94.99 | 71.1 | 73.2 | - | - |

Table 5

| (No calcium added) | | | | | | | |
|---|---|---|---|---|---|---|---|
| | | Ni | Co | La | Ce | Fe | Ca |
| Cathode material | Content (%by weight) | 51.50 | 8.37 | 8.40 | 11.94 | 0.22 | - |
| Valent material | Content (% by weight) | 96.30 | 1.73 | 0.051 | 0.300 | 0.055 | - |
| Recovery rate (%) | | 79.92 | 71.72 | 2.11 | 8.72 | - | - |

As shown In Table 4 and Table 5, more recovery of valent metals, including nickel, cobalt, lanthanum and cerium, can be attained when adding calcium at the process for fusing (Table 4) than the recovery without addition of calcium at the process for fusing (Table 5). Particularly, the recovery rate for lanthanum and cerium, which constitute mesh metals, showed higher values.

For decreasing the carbon content, it is preferable to fuse the refuse batteries without addition of calcium and then to reduce the mesh metals with addition of calcium.

Consequently, it is obvious that the valent metals, in particular mesh metals, can be recovered in high purity and in high yield by subjecting the cathode materials being separated from the refuse secondary batteries to the fusing process following to the addition of calcium into the cathode material.

As described above, according to the recovery process specified in this embodiment, it is possible to simply recover the valent metals, particularly mesh metals, in high purity and in high yield from the refuse secondary batteries.

The recovering system of valent metals from the refuse secondary batteries according to the present embodiment is constituted by a separating means to mechanically separate the refuse secondary batteries and to separate them into cathode materials and anode materials and a fusing means to fuse the separated cathode materials obtained in the separating process following to the addition of calcium thereto, thereby recovering the valent metals.

[Third Embodiment]

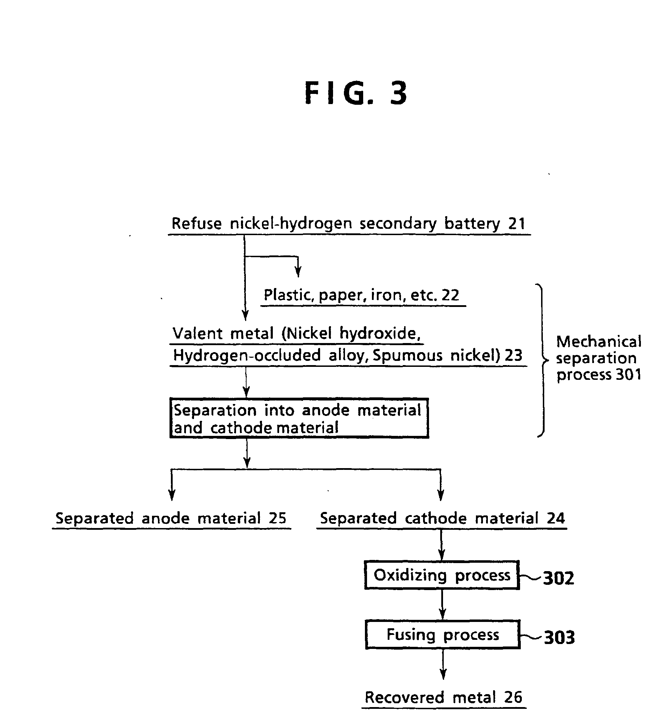

Fig.3 shows a flow chart for explaining the recovery process for valent metals from refuse nickel-hydrogen secondary batteries according to the present embodiment.

As illustrated in Fig.3, the recovery process for the valent metals from the refuse secondary batteries is constituted by a separating process 301 to destroy, crush and sieve dead nickel-hydrogen secondary batteries, then to remove plastics, papers, iron, etc. 22 by mechanical separating means to recover the valent metals 23 and to separate the recovered valent metals into cathode materials 24 and anode materials 25, an oxidizing process 302 to oxidize the cathode materials 24 at a low temperature (lower than 300°C) and a fusing process 303 to fuse the oxidized materials under an atmosphere of an inactive gas (ex. Argon, etc.) at a temperature, for example 1500°C, thereby recovering Ni, etc. as recovered metals 26 from the fused materials.

The separating process 301 for the valent metals by breaking down, crushing and sieving the dead nickel-hydrogen secondary batteries is a process to separate the batteries into a group consisting of plastics, papers, iron, etc. 22 and a group of valent metals 13, such as nickel hydroxide, hydrogen-occluded alloy and spumous nickel, for which a shearing crusher or the like is used for the breaking down, a crusher having 3 cutters and 5 stages or the like is used for the crushing under wet condition, and a sieve with 28 mesh more or less is used for the sieving. The non-separated materials remained over the sieve are magnetically separated at magnetic power of 2,000-3,000 Gauss to remove non-magnetic materials, such as plastics and papers, and trace amount of plastics and papers are removed by means of burning.

The residue remained after burning are pulverized by using a vibrating mill and then sieved through a sieve having 24 mesh more or less to separate into iron and spumous nickel, and the spumous nickel obtained is concentrated and recovered as a fine particle part less than 24 mesh to obtain the valent metals 23.

Whereas, active materials for a battery, valent metals, such as nickel-hydrogen and nickel hydroxide, are also concentrated into the said fine particle part less than 24 mesh which is obtained by wet crushing and separation by using a crusher. However, the mesh size specified above should not be limited to the range specified above.

A further efficient separation could be attained by employing the mechanical separation process to make the materials breakable at a low temperature with liquid nitrogen as described in the first embodiment.

The cathode materials 24 mechanically-separated from the valent metals 23 are oxidized at a low temperature lower than 300°C. In the present embodiment, it is preferable to set said temperature at 300°C or lower, and more preferably at 150°C or lower.

If the said temperature for the oxidation is set at higher than 300°C, oxidation reaction in normal atmosphere may proceed too fast, which requires to pay further strict control on the atmosphere.

The oxygen concentration required for the present embodiment is preferably in a range of from 5 to 25%, and more preferably in a range of from 7 to 20%. Efficiency for removing carbon (C) can be lowered when the said oxygen concentration is less than 5%, whereas the oxygen reaction proceeds too fast and thereby lowering a rate for recovering metals when the oxygen concentration is higher than 25%.

The reason to set the said oxygen concentration at a range specified above is to improve the carbon-removing rate according to the mechanism described below.

In general, when fusing the cathode materials under an atmosphere of an inactive gas, the oxidation and removal of carbon is carried out by using oxygen contained in the said cathode materials. Under the condition where the cathode materials are fused, rare earth elements contained in the cathode materials can be oxidized in preference to carbon (C), which consumes oxygen contained in the cathode materials, and the oxidation and removal of carbon is then accomplished with the remaining oxygen therein. Therefore, it is required to supply surplus oxygen to be used for oxidizing rare earth elements other than oxygen to be used for oxidizing carbon into the cathode materials, so that the oxygen concentration in this embodiment is set to a range of from 5 to 25% for this reason.

Further, in adjustment of the oxygen concentration, the surplus oxygen to be added can be appropriately adjusted to a range of from 5 to 25% beforehand by adding nickel hydroxide as a anode material pro re nata.

The oxidation reaction for the rare earth elements (RE) to be subjected to the fusing-process is a priority reaction as follows.

$$\text{RE (rare earth elements other than Ce)} + 3/2 \text{ O} \rightarrow 1/2 \text{ RE}_2\text{O}_3 \tag{1}$$

$$\text{Ce} + 2 \text{ O} \rightarrow \text{CeO}_2 \tag{2}$$

And, the reaction for removing carbon is as follows.

$$\text{C} + 2 \text{ O} \rightarrow \text{CO}_2 \tag{3}$$

or

$$\text{C} + \text{O} \rightarrow \text{CO} \tag{4}$$

As described above, recovery of valent metals, such as Ni and Co, can be achieved by oxidizing and fusing the cathode materials contained in the refuse nickel-hydrogen secondary batteries at a low temperature lower than 300°C.

Alternatively, the following process can be employed as a process for fusing and removing the rare earth elements.

10-90% of the rare earth elements can be fused and removed with an inorganic acid, such as hydrochloric acid and sulfuric acid, in an amount of 0.1-2.5 times equivalent, and preferably 0.3-1.5 times equivalent, which is required for dissolving the rare earth elements. The reason to fix the amount of the inorganic acid to a range of from 0.1-2.5 times equivalent is that the amount of the fused rare earth elements gets less and the carbon-removing effect at the fusing process get reduced when the amount of the inorganic acid is less than 0.1 times equivalent, whereas the loss of nickel and cobalt at the fusing process other than rare earth elements get increased when the amount of the inorganic acid is more than 2.5 times equivalent.

Then, after dissolving the rare earth elements with the inorganic acid and remove it, the cathode materials are subjected to drying and oxidation processes at a temperature lower than 300°C, preferably lower than 150°C, and more preferably lower than 100°C to adjust the oxygen concentration to a range of from 5 to 25% for the subsequent oxidation.

Whereas, it is possible to adjust the oxygen concentration to an appropriate range of from 7 to 20% by gradually oxidizing the cathode materials in water while bubbling air therein before subjecting it to the drying process.

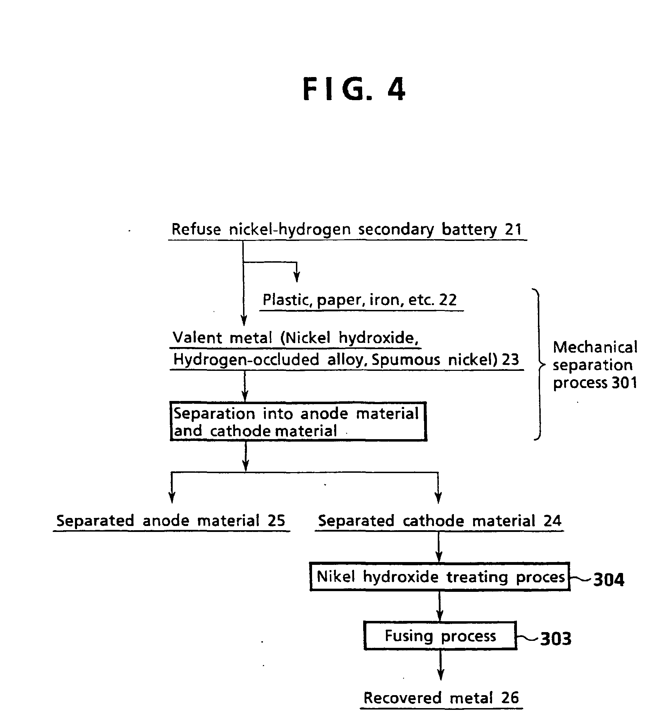

Further, as shown in Fig.4, the oxidizing process 302 in the third embodiment described above can be replaced by nickel hydroxide treating process 304 to add nickel hydroxide.

The recovering system of valent metals from refuse secondary batteries of the present example based on the recovering process as described above is constituted by a separating means to mechanically separate the refuse secondary batteries and to separate the battery materials into cathode materials and anode materials and oxidizing means to oxidize the cathode materials in the recovered valent metals at a low temperature, thereby recovering the valent metals from the refuse secondary batteries.

[Example 2]

Now, an example for the third embodiment is explained below, however, it should not be construed that the scope of the invention is limited to the range of the description in the following.

〈Comparison Example〉

The pure cathode shown in Table 6 in an amount of 10g and nickel in an amount of 30g are directly filled into an aluminum crucible without subjecting them to oxidation and are subsequently subjected to the fusing process at 1,500°C for 2 hours under argon gas flow at a flow rate of 0.5 liter/min. to thereby recover the valent metals.

〈Example 2-1〉

The material in an amount of 10g obtainable by oxidizing the pure cathode having a composition shown in Table 6 by drying at 150°C for 24 hours and nickel in an amount of 30g are filled into an aluminum crucible and subjected to the fusing process at 1,500°C for 2 hours under argon gas flow at a flow rate of 0.5 liter/min. to thereby recover the valent metals.

〈Example 2-2〉

Pure cathode material in an amount of 10g having a composition shown in Table 6, whereto nickel hydroxide in an amount of 10% based on the weight of the pure cathode is added, and nickel in an amount of 30g are filled into an aluminum crucible, and the crucible was subjected to the fusing process at 1,500°C for 2 hours under argon gas flow at a flow rate of 0.5 liter/min. to thereby recover the valent metals.

〈Example 2-3〉

Pure cathode material in an amount of 10g having a composition shown in Table 6, whereto nickel hydroxide in an amount of 20% based on the weight of the pure cathode, and nickel in an amount of 30g are filled into an aluminum crucible and subjected to the fusing process at 1,500°C for 2 hours under argon gas flow at a flow rate of 0.5 liter/min. to thereby recover the valent metals. The results are shown in Table 6.

Table 6

|  | | Type | | | | | | | Recovered Metal | | | | | | Metal Recovery Rate | | | | |
|---|---|---|---|---|---|---|---|---|---|---|---|---|---|---|---|---|---|---|---|
|  | | | Ni (%) | Co (%) | Ce (%) | La (%) | C (%) | O (%) | Amount (g) | Ni (%) | Co (%) | Ce (%) | La (%) | C (ppm) | Ni (%) | Co (%) | Ce (%) | La (%) | C (%) |
| Comparison Example | Pure Cathode | | 48.1 | 10.1 | 15.7 | 11.1 | 1.0 | 1.0 | 38.4 | 90.5 | 2.6 | 3.7 | 2.6 | 2500 | 99.0 | 99.0 | 89.8 | 91.0 | 96.9 |
| Example 2-1 | Oxidized Material | | 44.8 | 9.4 | 14.6 | 10.3 | 0.9 | 8.3 | 35.3 | 97.0 | 2.4 | 0.1 | 0.1 | 300 | 84.4 | 80.1 | 2.4 | 3.4 | 11.8 |
| Example 2-2 | Ni(OH)₂⁻ added | | 49.5 | 9.2 | 14.3 | 10.1 | 0.9 | 5.0 | 35.2 | 97.2 | 2.1 | 0.1 | 0.1 | 400 | 85.1 | 81.5 | 2.5 | 3.5 | 15.6 |
| Example 2-3 | Ni(OH)₂⁻ added | | 50.7 | 8.4 | 13.1 | 9.2 | 0.8 | 8.4 | 33.2 | 98.2 | 1.3 | <0.1 | <0.1 | 70 | 51.3 | 51.2 | - | - | 2.9 |

(Regend)
Example 2 : 10% Ni(OH)₂ is added.
Example 3 : 20% Ni(OH)₂ is added.

As shown in Table 6, the recovery rates for Ni and Co are both higher than 90% in Example 2-1, both are 80% in Example 2-2, and both are 50% more or less in Example 2-3 though the amount of carbon being reduced.
As described above, the recovery of valent metals, such as nickel and cobalt, from the refuse nickel-hydrogen secondary batteries can be efficiently achieved by simple process according to the present embodiment.

[Forth Embodiment]

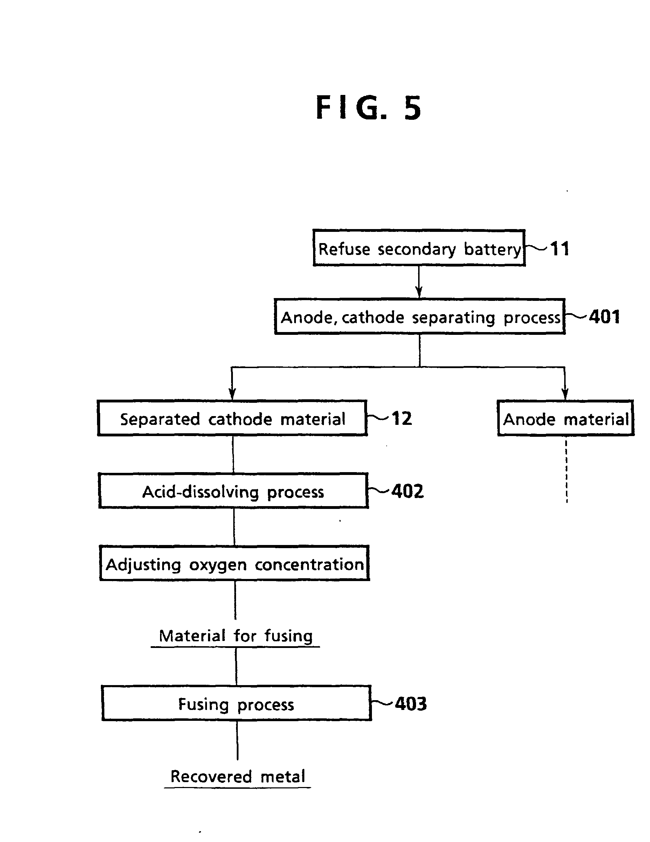

Fig.5 shows a flow chart for explaining the recovery process for valent metals from refuse nickel-hydrogen secondary batteries according to the present embodiment.

As shown in Fig.5, the present recovery process is a process to mechanically separate the refuse secondary batteries 11 into cathode material and anode material in the separating process 401 and then to recover valent metals from the separated cathode material 12, wherein the separated cathode material 12 is subjected to an acid-dissolving process 402 to remove the rare earth elements contained therein with an acid in an amount of 0.1-2.5 times equivalent, which is the amount required for dissolving the rare earth elements, and is then dried, and the dried material is fused in the fusing process 403 to recover the valent metals.

Similarly in the third embodiment, the separated cathode material is defined in the present embodiment as a cathode composition itself or a cathode composition whereto an anode composition is partly contained.

Now, recovering process for valent metals according to the present embodiment is explained with referring to the attached drawings.

In the acid-dissolving process 402, the separated cathode material 12 is dissolved with an acid as shown in Fig.5. Namely, the separated cathode material 12 is admixed with a solution of an acid such as sulfuric acid and is subjected to the infusion. For the acid used here, a strong acid, such as sulfuric acid, hydrochloric acid and nitric acid, can be given as the examples, and preferable pH range of the acid is from 3 to 4. The amount of the acid is in a range of from 0.1 to 2.5 times equivalent, and more preferably from 0.3 to 1.6 times equivalent, which amount is required for dissolving the rare earth elements (RE). The reaction of the acid and the rare earth elements in the said process is represented by the following equations.

$$RE + 3/2\ H_2SO_4 \rightarrow RE^{3+} + 3/2\ SO_4^{2-} + 3/2\ H_2 \uparrow (Gas) \qquad (5)$$

$$RE + 3\ HCl \rightarrow RE^{3-} + 3\ Cl + 3/2\ H_2 \uparrow (Gas)$$

$$RE + 3\ HNO_3 \rightarrow RE^{3+} + 3\ NO^- + 3/2\ H_2 \uparrow (Gas)$$

By dissolving the cathode material with the acid in the amount described above, 10-90% of the rare earth elements can be removed. When the amount of the acid is less than 0.1 time equivalent, only small amount of the rare earth elements can be dissolved, which causes less removal of carbon at the fusing process. Whereas, when the amount of the acid is more than 2.5 times equivalent, it is problematic that not only rare earth elements but also great amount of nickel and cobalt dissolve in the acid and could be lost.

The rare earth elements described here are defined as Mm, La, Ce, Nd, etc.

In the fusing process 403, the separated cathode material from which certain amount of the rare earth elements have been removed is then dried and subsequently subjected to the fusing process.

The fusing process 403 is taken place at a temperature higher than the melting point, and more preferably at the fusing temperature of from 1,450 to 1,600°C under an atmosphere of an inactive gas, such as argon, after addition of nickel as a starter metal.

Carbon can be oxidized and then removed with oxygen contained in the separated cathode material to be fused at the time of fusing the material under an atmosphere of an inactive gas. However, oxygen tends to be consumed for oxidizing the rare earth elements in preference to the oxidation of the carbon according to the equation (1) described above, and the carbon can be oxidized and removed with the remaining oxygen according to the equation (2) or (3).

Consequently, it is more useful to remove the rare earth elements, which would obstruct the oxidation of carbon, as much as possible for recovering the valent metals containing less carbon content.

In this sense, it is necessary to supply surplus oxygen which can cover the oxygen amount to be used for the oxidation of the rare earth elements other than that of the carbon in the material to be fused.

By taking such process above, it can be allowable to obtain the valent metals with low carbon content in high purity and in high yield.

The recovering system for valent metals from refuse secondary batteries according to the present embodiment based on the recovering processes as described above is constituted by a separating means to mechanically separate the refuse secondary batteries and further separate them into cathode materials and anode materials, a rare earth elements removing means to remove the rare earth elements by adding an acid in an amount of 0.1-2.5 times equivalent based on the weight of the cathode materials, which amount is required to dissolve the rare earth elements, a drying means to dry the separated cathode materials from which the rare earth elements have been removed, and a fusing means to fuse the dried cathode materials to recover the valent metals.

[Example 3]

Now, an example preferable for the forth embodiment of the present invention is explained below, however, it should be noted that the scope of the present embodiment shall not be limited to the description in the following.

〈Reference Example〉

The cathode materials in an amount of 10g recovered from refuse nickel-hydrogen secondary batteries and nickel in an amount of 30g are filled into an aluminum crucible, and the materials are kept therein for 2 hours at 1,500°C under argon gas flow at a rate of 0.5 liter/min. to recover the valent metals.

〈Example 3-1〉

The cathode material recovered from refuse nickel-hydrogen secondary batteries is prepared into a suspension kept to a slurry concentration of 200g/liter. The suspension is then added while taking an hour time with hydrochloric acid in an amount of 0.3 time equivalent according to the rare earth elements dissolving reaction represented by the equation (1), and the suspension is further kept for an hour while applying air bubbling, filtered and then dried for 6 hours at 70°C. The dried materials in an amount of 10g to be subjected to the fusing process, of which oxygen concentration is 10.3% by weight, and nickel in an amount of 30g are filled in an aluminum crucible and kept therein for 2 hours at 1,500°C under argon gas flow at a rate of 0.5 liter/min., thereby recovering the valent metals.

〈Example 3-2〉

The cathode material recovered from nickel-hydrogen secondary batteries was prepared into suspension kept at a slurry concentration of 200g/liter. Based on the dissolving reaction for rare earth elements represented by the equation (1) described above, the suspension was added with hydrochloric acid in an amount of 0.7 time equivalent while taking an hour time and kept under air bubbling for an hour, filtered and dried for 6 hours at 70°C to obtain the materials to be subjected to the fusing process. The materials to be used for the fusing process (oxygen concentration: 15.2% by weight) in an amount of 10g and nickel in an amount of 30g were filled in an aluminum crucible and kept for 2 hours at 1,500°C under argon gas flow at a flow rate of 0.5 liter/min. to thereby recover the valent metals.

〈Example 3-3〉

The cathode material recovered from nickel-hydrogen secondary batteries was prepared into suspension kept at a slurry concentration of 200g/liter. Based on the dissolving reaction for rare earth elements represented by the equation (1) described above, the suspension was added with hydrochloric acid in an amount of 1.5 times equivalent while taking an hour time and kept under air bubbling for an hour, filtered and dried for 6 hours at 70°C to obtain the materials to be subjected to the fusing process. The materials to be used for the fusing process (oxygen concentration: 16% by weight) in an amount of 10g and nickel in an amount of 30g were filled in an aluminum crucible and kept for 2 hours at 1,500°C under argon gas flow at a flow rate of 0.5 liter/min. to thereby recover the valent metals.

The contents and the metal recovery rates of each elements contained in the material to be used for the fusing process and the recovered metals in the Examples 3-1 through 3-3 and Reference Example are shown in Table 7.

Furthermore, the contents, remaining rates, metal recovery rates and total recovery rates of each elements contained in the cathode material and the materials to be used for the fusing process in the Examples 3-1 through 3-3 are shown in Table 8. In the table, % means % by weight.

Table 7

| Material for Fusing Process | | | | Ni % | Co % | Ce % | La % | C % | O % | Recovered Metals | | | | | | Metal Recovery Rate | | | | |
|---|---|---|---|---|---|---|---|---|---|---|---|---|---|---|---|---|---|---|---|---|
| | Type | | | | | | | | | Amount (g) | Ni % | Co % | Ce % | La % | C ppm | Ni % | Co % | Ce % | La % | C % |
| Reference Example | Pure Cathode | | | 48.1 | 10.7 | 15.7 | 11.1 | 1 | 1 | 38.4 | 90.5 | 2.6 | 3.7 | 2.6 | 2500 | 99 | 99 | 89.8 | 91 | 96.9 |
| Example 3-1 | Product treated with Acid | HCl Equivalent | 0.3 | 54.1 | 7.9 | 9.8 | 6.8 | 1.4 | 10.3 | 35.5 | 97.7 | 1.7 | <0.1 | <0.1 | 50 | 87.3 | 76.4 | - | - | 1.3 |
| Example 3-2 | | | 0.7 | 57.2 | 7.7 | 8.4 | 5.7 | 1.3 | 15.2 | 36.4 | 97.5 | 1.6 | <0.1 | <0.1 | 40 | 96 | | - | - | 1.1 |
| Example 3-3 | | | 1.5 | 60.4 | 7.9 | 6.4 | 4.3 | 1.5 | 15 | 36.6 | 97.8 | 2 | <0.1 | <0.1 | 20 | 96 | | - | - | 0.5 |

Table 8

| | | | Ni % | Co % | Ce % | La % | C % | O % |
|---|---|---|---|---|---|---|---|---|
| Example 3-1 | Acid Applied Acid Equivalent 0.3 (Relative to Rare Earth Element) | Raw Material 100 g | 53.5 | 8.3 | 13.1 | 9.2 | 1.2 | 4.5 |
| | | Product after application 94.6g | 54.1 | 7.9 | 9.8 | 6.8 | 1.4 | 10.3 |
| | | Remaining Rate | 95.7 | 90.0 | 70.8 | 69.9 | - | - |
| | Fusing Applied | Metal Recovery Rate | 87.3 | 76.4 | - | - | 1.3 | - |
| | Generalized Recovery Rate | | 83.5 | 68.8 | - | - | 1.3 | - |
| Example 3-2 | Acid Applied Acid Equivalent 0.7 (Relative to Rare Earth Element) | Raw Material 100 g | 53.5 | 8.3 | 13.1 | 9.2 | 1.2 | 4.5 |
| | | Product after Application 80.3g | 67.2 | 7.7 | 8.4 | 5.7 | 1.3 | 15.2 |
| | | Remaining Rate | 85.9 | 74.5 | 51.5 | 49.8 | - | - |
| | Fusing Applied | Metal Recovery Rate | 96.0 | 75.6 | - | - | 1.1 | - |
| | Generalized Recovery Rate | | 82.5 | 56.3 | - | - | 1.1 | - |
| Example 3-3 | Acid Applied Acid Equivalent 1.5 (Relative to Rare Earth Element) | Raw Material 100 g | 53.5 | 8.3 | 13.1 | 9.2 | 1.2 | 4.5 |
| | | Product after application 62.5g | 60.4 | 7.9 | 6.4 | 4.3 | 1.5 | 16 |
| | | Remaining Rate | 70.6 | 59.5 | 30.5 | 29.2 | - | - |
| | Fusing Applied | Metal Recovery Rate | 96.0 | 93.7 | - | - | 0.5 | - |
| | Generalized Recovery Rate | | 67.8 | 55.8 | - | - | 0.5 | - |

From the results shown in Table 7 and Table 8, it is understood that valent metals (nickel and cobalt) containing carbon at a lower content can be recovered in higher purity and in high yield according to the processes described in Examples 3-1 through 3-3, wherein the cathode material separated from the refuse secondary batteries was dissolved with an acid, dried and oxidized, and the resulting material was subjected to the fusing process, in comparison with the process in Reference Example 1 where the cathode material was subjected to the fusing process.

As described above, according to the recovering process of the present invention, it is allowable to simply recover valent metals with low carbon content in high purity and in high yield from the refuse secondary batteries.

[Fifth Embodiment]

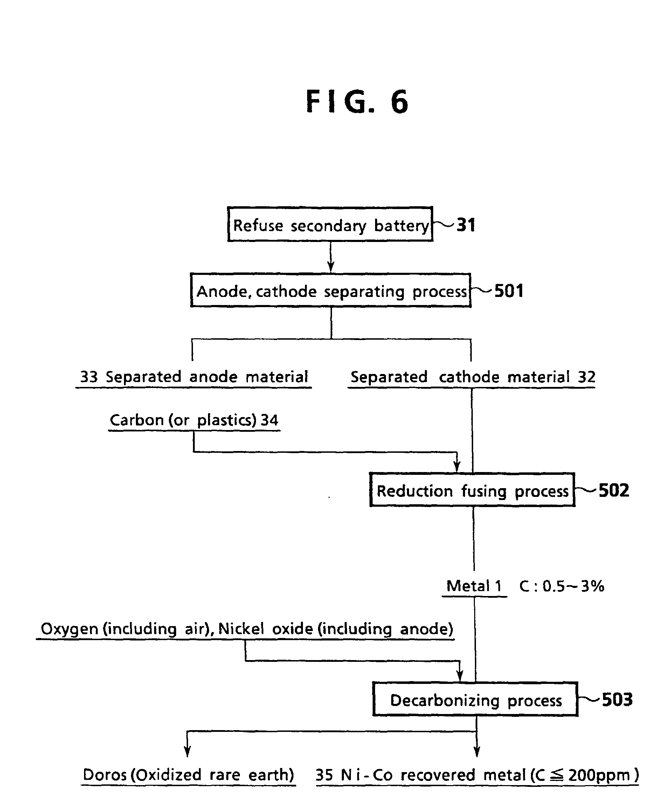

Fig. 6 is a flow chart for explaining the recovering process for valent metals from refuse secondary batteries according to the fifth embodiment of the present invention.

As shown in Fig. 6, the recovering process according to this embodiment is constituted by a separating process 501 to mechanically separate refuse secondary batteries 31 and to separate the secondary batteries into the separated cathode material 32 and the separated anode material 33, a reduction fusing process 502 to add either carbon or plastic 34 into the separated cathode material 32 and then subject the added cathode material to the reduction fusing process and a decarbonizing process 503 to oxidize and remove carbon contained in the valent metals by heating the metal 1(C: 0.5-3%) under an oxidized atmosphere following to the reduction fusing process 502 to recover the valent metals as recovered metals 35.

In this embodiment, as objective refuse secondary batteries, the ones described in the first embodiment can be used, and the mechanical separation of batteries into the anode material and the cathode material can be done by publicly-known process or the process specified in the first embodiment of the present invention.

In this embodiment, the separated cathode material may contain an anode material, a refuse anode material and refuse sintered nickel.

As the reducing agent in the reduction fusing process 502 of the present embodiment, it is particularly preferable to use the one which contains carbon. This is because of that the reducing agent containing carbon is generally cheap and the reaction therewith mildly proceeds. Alternatively, hydrogen gas can be used as the reducing agent, however, it requires special facility to use hydrogen gas, which costs high and is not practical. Metal aluminum and metal calcium can be also used, however, it is not preferable to use these metals because these metals are more expensive than the reducing agent containing carbon and proceed the reaction vigorously.

The carbon content in the valent metals, which mainly contains nickel, obtainable at the reduction of the said reducing agent containing carbon is preferably in a range of from 0.01% to 2.8%, more preferably from 0.1% to 2.4%, and further preferably from 1% to 2.22%. In case that the carbon content in nickel exceeds such range, the melting point thereof tend to rise up immediately. For example, the melting point of nickel, of which carbon content is 2.22%, is 1,318°C

In the decarbonizing process 503 described above, carbon dissolved in the valent metals is oxidized and removed by subjecting the valent metals to the fusing process following to the addition of an oxidizing agent, such as oxygen (or air) and nickel oxide (including anode materials).

The oxygen content in the valent metals obtainable at the said fusing process is preferably in a range of from 0.01% to 1.5%, more preferably from 0.01% to 1.5%, and further preferably from 0.1% to 1%. This is because of that the melting point of the nickel raises too high when the oxygen content in nickel exceeds such range, though carbon content in the nickel can be reduced more in parallel to the increase of the oxygen content in the nickel. When the oxygen content exceeds 0.87%, the melting point of the nickel rapidly rise up, which is not preferable for the recovery. When the oxygen content in nickel is 0.87%, the melting point becomes the eutectic point of Ni and NiO (Melting point : 1,455°C).

According to the recovering process of the present embodiment, it is possible to obtain Ni-Co recovered metals containing carbon at a concentration of less than 200 ppm.

Addition of $CaF_2$ may be employed in the decarbonizing process 503 described above. By the addition of $CaF_2$, it is allowable to improve the recovery rate.

By employing the processes described above, it is allowed to recover metals containing no carbon from valent metals containing Ni and Co, which is consisted of refuse cathode materials, refuse anode materials, refuse sintered nickel and mixture thereof, obtainable by mechanical separation of refuse secondary batteries.

The system for carrying out the recovering process according to the present embodiment is constituted by a separating means to mechanically separate refuse secondary batteries into a separated cathode material and a separated anode material, a reduction fusing means to add either carbon or plastic to the separated cathode material and then to subject the added cathode material to the reduction fusing process and a decarbonizing means to heat the cathode material under an oxidized atmosphere either prior or after the reduction and fusing process to oxidize and remove carbon contained in the valent metals, thereby recovering the valent metals.

The recovering system for carrying out the recovering process for valent metals from refuse secondary batteries according to the present embodiment is constituted by a separating means to mechanically separate refuse secondary batteries into a separated cathode material and a separated anode material, a reduction fusing means to add either carbon or plastic to the separated cathode material and then to subject the added cathode material to the reduction fusing process and a decarbonizing means to heat the cathode material under an oxidized atmosphere either prior or after the reduction fusing process to oxidize and remove carbon contained in the valent metals, thereby recovering the valent metals.

Now, the examples ① to ④ to which the fifth embodiment is applicable are explained below by referring to the attached drawings.

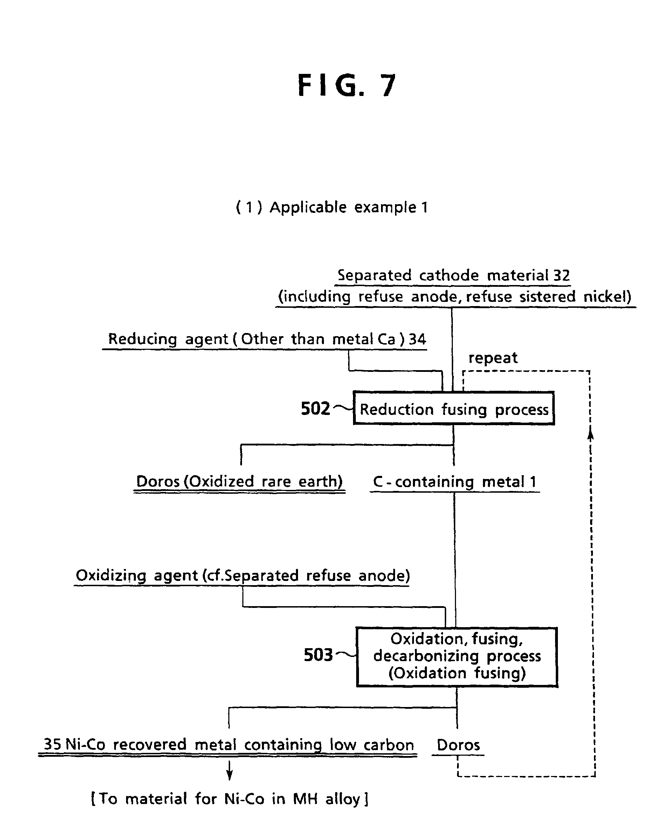

① Fig. 7 is a flow chart for explaining an applicable example 1 for the recovering process for valent metals from refuse secondary batteries according to the present embodiment.

Here, an explanation on the separating process 501 is omitted. (The same as follows.)

As shown in Fig. 7, the recovering process of this applicable example comprises a reduction fusing process 502 to add either carbon or plastic as a reducing agent 234 other than metal calcium to the separated cathode material 32, which may contain a refuse anode material and refuse sintered nickel, and then to subject the added cathode material to the reduction fusing process, and a decarbonizing process 503 to remove doros (oxidized rare earth elements) following to the reduction fusing process 502 and to heat carbon-containing metal I under an oxidized atmosphere to oxidize and remove carbon contained in valent metals, thereby recovering low-carbonized valent metals (Ni-Co) as recovered metals 35. The recovered metals 35 are used again as Ni-Co raw material for hydrogen-occluded alloy. By reducing and fusing the doros again, the recovery rate can be improved.

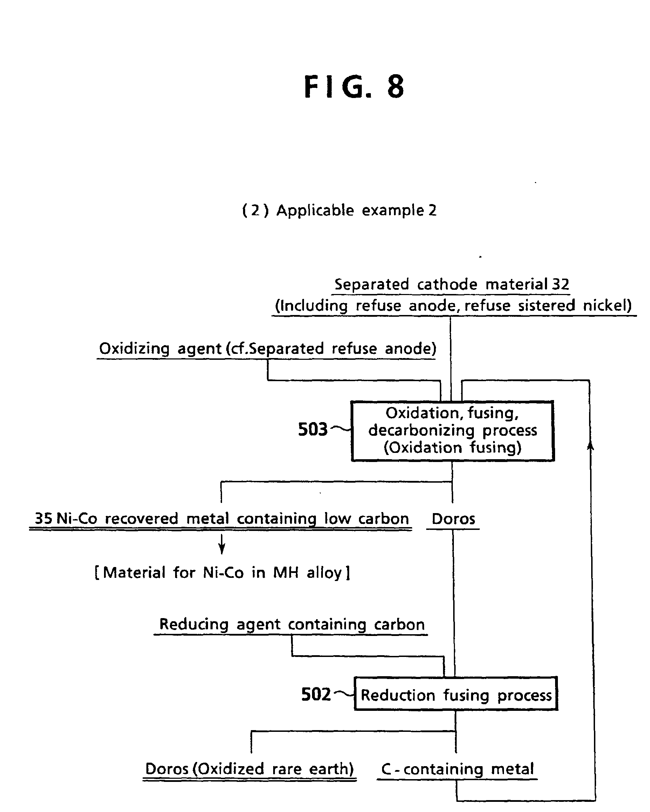

② Fig. 8 is a flow chart for explaining an applicable example 2 for the recovering process for valent metals from refuse secondary batteries according to the present embodiment.

As shown in Fig. 8, the recovering process of the applicable example 2 comprises a decarbonizing process 503 to add an oxidizing agent, for example the separated anode material, to the separated cathode material 32, which may contain refuse anode material and refuse sintered nickel, and then to heat and fuse the added cathode material under an oxidized atmosphere to oxidize and remove carbon contained in the valent metals, a reduction fusing process 502 to add either carbon or plastic as a reducing agent to the doros and then to subject the added doros to reduction and fusing, and a process to remove the doros (oxidized rare earth elements) following to the reduction fusing process 502 and then to circulate carbon-containing metal I to the decarbonizing process 503, thereby recovering low-carbonized valent metals (Ni-Co) as recovered metals 35.

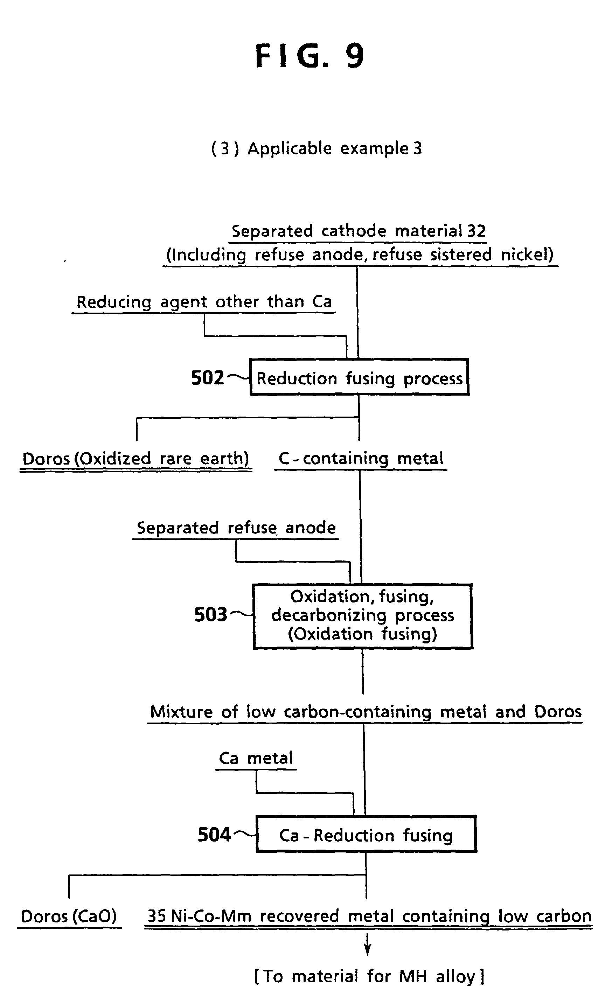

③ Fig. 9 is a flow chart for explaining an applicable example 3 for the recovering process for valent metals from refuse secondary batteries according to the present embodiment.

As shown in Fig. 9, the recovering process of this applicable example 3 comprises a reduction fusing process 502 to add either carbon or plastic as a reducing agent 34 other than metal calcium to the separated cathode material 32, which may contain a refuse anode material and refuse sintered nickel, and then to subject the added cathode material to the reduction fusing process, and a decarbonizing process 503 to remove the doros (oxidized rare earth elements) following to the reduction fusing process 502 and to heat carbon-containing metal I under an oxidized atmosphere to oxidize and remove carbon contained in the valent metals by adding a separate oxidizing material, and a process 504 to add metal calcium to a mixture of low-carbonized metal and the doros and to subject the mixture to the reduction fusing process, thereby recovering low-carbonized valent metals (Ni-Co-Mm)) as recovered metals 35.

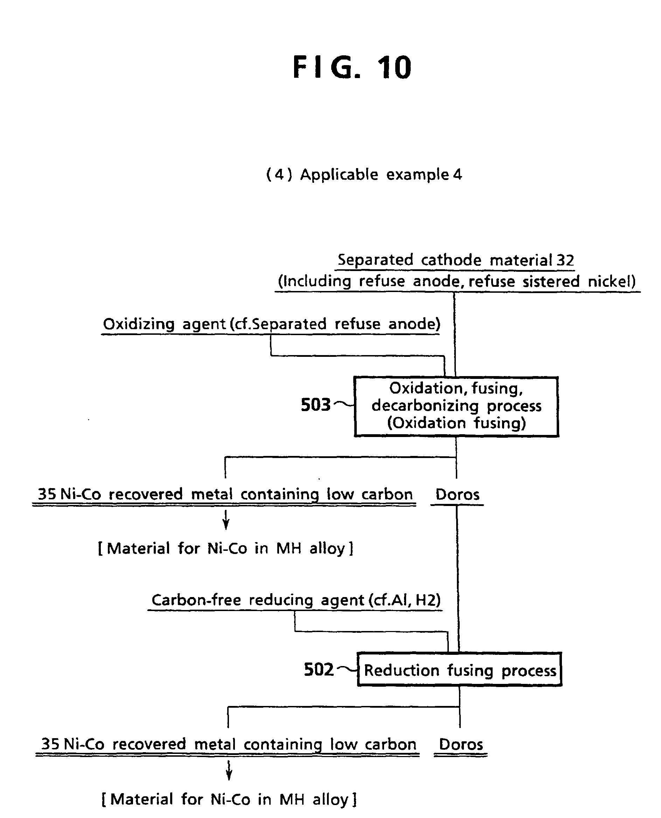

④ Fig. 10 is a flow chart for explaining an applicable example 4 for the recovering process for valent metals from refuse secondary batteries according to the present embodiment.

As shown in Fig. 10, the recovering process of the applicable example 4 comprises a decarbonizing process 503 to add an oxidizing agent, for example the separated anode material, to the separated cathode material 32, which may contain a refuse anode material and refuse sintered nickel, and then to heat and fuse the added cathode material under an oxidized atmosphere to oxidize and remove carbon contained in the valent metals and a reduction fusing process 502 to separate the cathode material into Ni-Co metal containing low carbon and the doros and then to subject the doros to the reduction fusing process following to the addition of either Al or $H_2$ as a reducing agent containing no carbon and then to subject the doros to the reduction fusing process, thereby recovering low-carbonized valent metals (Ni-Co) as recovered metals 35.

[Example 4]

Now, a preferable example for the fifth embodiment of the present invention is explained, however, it should be noted that the scope of the present invention shall not be limited to the description range in the following example.

〈Reference Example〉

Nickel-hydrogen secondary batteries were scrapped by hand work, and the cathode material obtained (hereinafter called as pure cathode material) in an amount of 10g and metal nickel in an amount of 30g as a starting metal were filled into an aluminum crucible. The crucible was then kept at 1,500°C for an hour under an inactive argon gas flow at a flow rate of 0.5 liter/min. to recover the valent metals in an amount of 37.6g.

〈Example 4-1〉

Nickel-hydrogen secondary batteries were separated into an anode material and a cathode material by mechanical separation using liquid nitrogen, and the separated cathode material, which contains nickel hydroxide and metal nickel in hydrogen-occluded alloy, in an amount of 100g and carbon in an amount of 20g were admixed and then filled into an aluminum crucible. The cathode material filled in a crucible was then subjected to fusing process at 1,500°C for 2 hours under argon gas flow to obtain a metal (recovered metal I) in an amount of 76.7g in a clump state.

Then, the obtained metal in an amount of 50g, the separated anode material (nickel hydroxide) in an amount of 20g and calcium fluoride in an amount of 10g were filled into an aluminum crucible, and the mixture in the crucible was subjected to fusing process at 1,500°C for an hour under argon gas flow to obtain a metal (recovered metal II) in an amount of 44.2g in a clump state.

〈Example 4-2〉

According to the same procedure described in the Example 4-1 except changing the additional amount of carbon to 7g, a metal (recovered metal I) in an amount of 69.2g was obtained in a clump state.

Then, the obtained metal in an amount of 30g, the separated anode material (nickel hydroxide) in an amount of 3g and calcium fluoride in an amount of 5g were filled into an aluminum crucible, and the crucible was subjected to fusing process at 1,500°C for an hour under argon gas flow to obtain a metal (recovered metal II) in an amount of 44.2g in a clump state.

〈Example 4-3〉

According to the same procedure described in the Example 4-1 except changing the additional amount of carbon to 10g, the separated cathode material was filled into an aluminum crucible and then subjected to fusing process at 1,400°C for 2 hours under argon gas flow to obtain a metal (recovered metal I) in an amount of 61.3g in a clump state.

Then, the obtained metal in an amount of 30g, the separated anode material (nickel hydroxide) in an amount of 6g and calcium fluoride in an amount of 5g were filled into an aluminum crucible, and the filled crucible was subjected to fusing process at 1,400°C for an hour under argon gas flow to obtain a metal (recovered metal II) in an amount of 37.4g in a clump state.

〈Example 4-4〉

According to the same procedure described in the Example 4-1 except changing the additional amount of carbon to 15g, the separated cathode material was filled into an aluminum crucible and then subjected to fusing process at 1,400°C for 2 hours under argon gas flow to obtain a metal (recovered metal I) in an amount of 71.8g in a clump state.

Then, the obtained metal in an amount of 30g, the separated anode material (nickel hydroxide) in an amount of 9g and calcium fluoride in an amount of 5g were filled into an aluminum crucible, and the filled crucible was subjected to fusing process at 1,400°C for an hour under argon gas flow to obtain a metal (recovered metal II) in an amount of 27.08g in a clump state.

〈Example 4-5〉

According to the same procedure described in the Example 4-1 except changing the additional amount of carbon to 10g, a metal (recovered metal I) in an amount of 63.9g was obtained in a clump state.

Then, the obtained metal in an amount of 30g, the separated anode material (nickel hydroxide) in an amount of 6g and calcium fluoride in an amount of 5g were filled into an aluminum crucible, and the filled crucible was subjected to fusing process at 1,500°C for an hour under argon gas flow to obtain a metal (recovered metal II) in an amount of 37.4g in a clump state.

〈Example 4-6〉

Nickel-hydrogen secondary batteries were separated into an anode material and a cathode material by mechanical separation using liquid nitrogen, and the separated cathode material, which contains nickel hydroxide and metal nickel in hydrogen-occluded alloy, in an amount of 100g, the separated anode material (nickel hydroxide) in an amount of 20g, which contains hydrogen-occluded alloy and metal nickel, and calcium fluoride in an amount of 10g were admixed and filled into an aluminum crucible. The filled crucible was then subjected to fusing process at 1,500°C for an hour under argon gas flow to obtain a metal (recovered metal I) in an amount of 76.7g in a clump state and doros in an amount of 39.5g.

Then, the obtained doros in an amount of 30g, metal calcium in an amount of 7g and calcium fluoride in an amount of 3g were filled into an aluminum crucible, and the filled crucible was subjected to fusing process-at 1,300°C for 0.5 hour under argon gas flow to obtain a metal (recovered metal II) in an amount of 16.4g in a clump state.

The results obtained in Examples 4-1 through 4-6 are shown in Tables 9 through 11.

As shown in these tables, it is allowable according to these examples to obtain Ni-Co recovered metal containing low carbon.

Table 9

| | | | Amount (g) | | Analyzed Data (%) | | | | | NET (g) | | | | |
|---|---|---|---|---|---|---|---|---|---|---|---|---|---|---|
| | | | | | Ni | Co | Ce | C | O | Ni | Co | Ce | C | O |
| Example 4-1 | Reduction Fusing | IN | Separated Cathode Carbon | 100 20 | 1500°C 2hr, Ar | 47.8 - | 6.1 - | 8.9 - | 1.5 - | - - | 47.8 | 6.1 | 8.9 | 1.6 | 0 |
| | | OUT | Recovered Metal 1 Recovered Rate (%) | 76.7 | | 62.1 99.6 | 7.6 95.1 | 10.2 87.6 | 2.4 | 0.001 | 47.6 | 5.8 | 7.8 | 1.84 | 0.001 |
| | Oxidation Fusing | IN | Recovered Metal 1 Separated Anode CaF₂ | 50 20 10 | 1500°C 1hr, Ar | 62.06 65.5 | 7.6 2.9 | 10.2 2.8 | 2.4 - | - - | 31.0 13.1 | 3.8 0.58 | 5.1 2.8 | 1.2 | 0 |
| | | OUT | Recovered Metal 1 Recovered Rate (%) | 44.2 | | 87.5 87.7 | 9.1 91.6 | <0.1 0.0 | 0.00 04 - | 1.50 - | 38.7 | 4.01 | - | - | - |
| Example 4-2 | Reduction Fusing | IN | Separated Cathode Carbon | 100 7 | 1500°C 2hr, Ar | 47.8 - | 6.1 - | 8.9 - | 1.6 - | - - | 47.8 | 6.1 | 8.9 | 1.6 | 0 |
| | | OUT | Recovered Metal 1 Recovered Rate (%) | 69.26 | | 67.1 97.3 | 8.5 96.1 | 10.7 83.1 | 0.1 - | 0.007 - | 46.5 | 5.86 | 7.4 | 0.06926 | 0.006 |
| | Oxidation Fusing | IN | Recovered Metal 1 Separated Anode CaF₂ | 30 3 5 | 1500°C 2hr, Ar | 67.1 65.5 | 8.5 2.9 | 10.68 2.8 | 0.10 - | - - | 20.1 1.965 | 2.53826 0.087 | 3.20531 | 0.03 | 0 |
| | | OUT | Recovered Metal 1 Recovered Rate (%) | 25.61 | | 100.7 116.7 | 11.9 107.8 | <0.1 0.0 | 0.01 - | 0.01 - | 25.8 | 2.83 | - | - | - |

Table 10

| | | | | Amount (g) | | Analyzed Data (%) | | | | | NET (g) | | | | |
|---|---|---|---|---|---|---|---|---|---|---|---|---|---|---|---|
| | | | | | | Ni | Co | Ce | C | O | Ni | Co | Ce | C | O |
| Example 4-3 | Reduction Fusing | IN | Separated Cathode Carbon | 100 10 | 1400℃ 2hr, Ar | 47.8 – | 6.1 – | 8.9 – | 1.6 – | – – | 47.8 | 6.1 | 8.9 | 1.6 | 0 |
| | | OUT | Recovered Metal 1 Recovered Rate (%) | 61.3 | | 75.5 96.9 | 9.5 95.1 | 7.5 51.7 | 1.0 – | 0.005 – | 46.3 | 5.8 | 4.6 | 0.613 | 0.003 |
| | Oxidation Fusing | IN | Recovered Metal 1 Separated Anode CaF₂ | 30 6 5 | 1400℃ 1hr, Ar | 75.5 65.5 | 9.5 2.9 | 7.5 2.8 | 1.0 – | – – | 22.7 3.93 | 2.84 0.174 | 2.25 | 0.3 | 0 |
| | | OUT | Recovered Metal 1 Recovered Rate (%) | 37.4 | | 69.3 97.4 | 11.9 95.3 | <0.1 0.0 | 0.005 – | 1.10 – | 25.9 | 2.87 | – | – | – |
| Example 4-4 | Reduction Fusing | IN | Separated Cathode Carbon | 100 15 | 1400℃ 2hr, Ar | 47.8 – | 6.1 – | 8.9 – | 1.6 – | – – | 47.8 | 6.1 | 8.9 | 1.6 | 0 |
| | | OUT | Recovered Metal 1 Recovered Rate (%) | 71.8 | | 66.2 99.4 | 8.2 96.7 | 10.2 82.0 | 2.2 – | 0.001 – | 47.5 | 5.9 | 7.3 | 1.68 | 0.001 |
| | Oxidation Fusing | IN | Recovered Metal 1 Separated Anode CaF₂ | 30 9 5 | 1500℃ 1hr, Ar | 66.2 65.5 | 8.2 2.9 | 10.17 2.8 | 2.20 – | – – | 19.0 5.895 | 2.47 0.261 | 3.050 14 | 0.66 | 0 |
| | | OUT | Recovered Metal 1 Recovered Rate (%) | 27.00 | | 87.1 91.7 | 11.9 94.6 | <0.1 0.0 | 0.005 – | 1.0 – | 23.6 | 2.58 | – | – | – |
| Example 4-4 | Reduction Fusing | IN | Separated Cathode Carbon | 100 10 | 1500℃ 2hr, Ar | 47.8 – | 6.1 – | 8.9 – | 1.6 – | – – | 47.8 | 6.1 | 8.9 | 1.6 | 0 |
| | | OUT | Recovered Metal 1 Recovered Rate (%) | 63.9 | | 72.5 96.9 | 9.1 95.1 | 7.7 55.1 | 1.1 – | 0.006 – | 46.3 | 5.8 | 4.9 | 0.7029 | 0.004 |
| | Oxidation Fusing | IN | Recovered Metal 1 Separated Anode CaF₂ | 30 6 5 | 1500℃ 1hr, Ar | 72.5 65.5 | 9.1 2.9 | 7.7 2.8 | 1.1 – | – – | 21.7 3.93 | 2.72 0.174 | 2.30 | 0.33 | 0 |
| | | OUT | Recovered Metal 1 Recovered Rate (%) | 37.4 | | 63.9 93.1 | 11.9 96.0 | <0.1 0.0 | 0.000 5 – | 0.50 – | 23.9 | 2.78 | – | – | – |

EP 1 049 190 A1

Table 11

| | | | | Amount (g) | | Analyzed Data (%) | | | | | NET (g) | | | | |
|---|---|---|---|---|---|---|---|---|---|---|---|---|---|---|---|
| | | | | | | Ni | Co | Ce | C | O | Ni | Co | Ce | C | O |
| Example 4-6 | Reduction Fusing | IN | Separated Cathode | 100 | 1500°C 1hr, Ar | 47.8 | 6.1 | 8.9 | 1.6 | - | 47.8 | 6.1 | 8.9 | 1.6 | 0 |
| | | | Separated Anode | 20 | | 65.5 | 2.9 | 2.8 | - | - | 13.1 | 0.58 | 0.56 | | |
| | | | Starter Ni Metal 1 | 100 | | >99.9 | | | | | 100 | | | | |
| | | | Carbon | 10 | | | | | | | | | | | |
| | | OUT | Recovered Metal 1 | 166 | | 95.8 | 3.9 | <0.1 | 0.005 | 0.03 | 159 | 8.48 | 0 | 0.0083 | 0.050 |
| | | | Doros 1 | 39.5 | | 4.61 | 0.47 | 23.0 | - | - | 1.82 | 0.87 | 9.08 | | |
| | | | Recovered Rate (%) | | | 98.9 | 97.2 | 0.0 | - | - | | | | | |
| | Oxidation Fusing | IN | Doros 1 | 30 | 1500°C 1hr, Ar | 4.61 | 0.47 | 23.0 | 0 | - | 1.3830 | 0.1410 | 6.8962 | 0 | 0 |
| | | | Ca Metal | 7 | | - | - | - | - | - | | | | | |
| | | | CaF₃ | 3 | | | | | | | | | | | |
| | | OUT | Recovered Metal 1 | 16.4 | | 8.4 | 0.8 | 41.3 | 0.02 | 0.05 | 1.37 | 0.138 | 6.78 | - | - |
| | | | Recovered Rate (%) | | | 99.1 | 97.9 | 98.3 | - | - | | | | | |
| Reference Example | Fusing Applied | IN | Pure Cathode | 10 | 1500°C 1hr, Ar | 48.1 | 0.1 | 15.1 | 1 | - | 4.81 | 1.01 | 1.51 | 0.1 | 0 |
| | | | Starter Ni Metal | 30 | | >99.9 | | | | | 30 | | | | |
| | | OUT | Recovered Metal 1 | 37.6 | | 92.3 | 2.6 | <0.1 | 0.25 | 0.008 | 34.7 | 0.99 | 1.43 | 0.094 | 0.003 |
| | | | Recovered Rate (%) | | | 99.7 | 98.0 | 94.7 | - | - | | | | | |

23

Industrial Use

According to the present invention, it is possible to provide a safe, simple to use and economically-advantageous recovering process and recovering system for valent metals with low carbon content in high purity and in high yield from refuse secondary batteries.

**Claims**

1. A process for recovering valent metals from refuse secondary batteries, characterized in that the process is constituted by a separating process to mechanically separate the refuse secondary batteries and to separate them into a separated cathode material and a separated anode material, and a process to recover valent metals from the separated cathode material and the separated anode material obtained in the separating process.

2. A system for recovering valent metals from refuse secondary batteries, characterized in that system comprises a separating means to mechanically separate the refuse secondary batteries and to separate them into a separated cathode material and a separated anode material, and a means to recover valent metals from the separated cathode material and the separated anode material obtained by the separating means.

3. The recovering process for valent metals from refuse secondary batteries according to claim 1, characterized that the process comprises a cooling means to refrigerate the refuse secondary batteries with liquid nitrogen and a first crushing process to crush the refrigerated refuse secondary batteries to thereby recover the valent metals from the crushed batteries.

4. The recovering process for valent metals from refuse secondary batteries according to claim 1, characterized in that the process comprises a water rinsing process to rinse the crushed material obtained in the crushing process and the first sieving process to carry out the first sieving.

5. The recovering process for valent metals from refuse secondary batteries according to claim 4, characterized in that the process comprises a second sieving process to sieve the material remained over a sieve in the first sieving process, a second crushing process to crush the material remained over a sieve in the first sieving process and a third sieving process to sieve the crushed material obtained in the second crushing process.

6. The recovering process for valent metals from refuse secondary batteries according to claim 5, characterized in that the material sieved down in the second sieving process is mainly consisted of the separated cathode material.

7. The recovering process for valent metals from refuse secondary batteries according to claim 6, characterized in that the separated cathode material is mainly consisted of hydrogen-occluded alloy.

8. The recovering process for valent metals from refuse secondary batteries according to claim 5, characterized in that the process comprises a rubbing process to rub a mixture of a component remained over a sieve in the second sieving process and a component sieved down in the third sieving process, and a wet magnetic separation process to magnetically separate the crushed-material under wet condition following to subjecting it to the rubbing process.

9. The recovering process for valent metals from refuse secondary batteries according to claim 8, characterized in that the component remained over a sieve in the third sieving process is mainly consisted of iron scrap, the magnetic component obtained in the wet magnetic separation process is mainly consisted of spumous nickel, and the non-magnetic component is mainly consisted of nickel hydroxide.

10. The recovering system for valent metals from refuse secondary batteries according to claim 2, characterized in that the separating means comprises a cooling means to refrigerate the refuse secondary batteries with liquid nitrogen and a crushing means to crush the refrigerated refuse secondary batteries to thereby recover the valent metals from the crushed material.

11. The recovering process for valent metals from refuse secondary batteries according to claim 1, characterized in that the process further contains a fusing process to fuse the separated cathode material separated in the separating process following to addition of calcium to the separated cathode material.

12. The recovering process for valent metals from refuse secondary batteries according to claim 11, characterized in that the additional amount of calcium is in a range of from 1 to 50 parts by weight based on 100 parts by wieght of the cathode material.

13. The recovering process for valent metals from refuse secondary batteries according to claim 11, characterized in that the addition of calcium is carried out following to the fusing of the separated cathode material.

14. The recovering process for valent metals from refuse secondary batteries according to claim 11, characterized in that nickel is added into the separated cathode material as a starting metal in the fusing process.

15. The recovering process for valent metals from refuse secondary batteries according to claim 11, characterized in that the fusing process is taken place under an atmosphere of an inactive gas.

16. The recovering process for valent metals from refuse secondary batteries according to claim 11, characterized in that the separated cathode material is crushed and separated after subjecting the refuse secondary batteries to refrigeration with liquid nitrogen during the mechanical separation process.

17. The recovering system for valent metals from refuse secondary batteries according to claim 2, characterized in that the system comprises a fusing means to add calcium into the separated cathode material separated by the separating means and then to fuse it to recover the valent metals.

18. The recovering process for valent metals from refuse secondary batteries according to claim 1, characterized in that the process comprises an oxidizing process to oxidize the separated cathode material separated in the separating process at a low temperature.

19. The recovering process for valent metals from refuse secondary batteries according to claim 18, characterized in that the oxidizing process is taken place at a temperature lower than 300 °C and the oxygen concentration is adjusted to a range of from 5 to 25%.

20. The recovering process for valent metals from refuse secondary batteries according to claim 18, characterized in that nickel hydroxide as an anode material is added for the adjustment of the oxygen concentration.

21. The recovering process for valent metals from refuse secondary batteries according to claim 18, characterized in that the separated cathode material is one being crushed and separated by means of refrigerating the refuse secondary batteries with liquid nitrogen during the mechanical separation process.

22. The recovering system for valent metals from refuse secondary batteries according to claim 2, characterized in that the system comprises an oxidizing means to oxidize the cathode material separated by the separating means at a low temperature for recovering the valent metals.

23. The recovering process for valent metals from refuse secondary batteries according to claim 1, characterized in that the process comprises a rare earth elements removing process to add an acid in an amount of 0.1-2.5 times equivalent based on the weight of the separated cathode material, which is required for dissolving the rare earth elements, in the separating process, a drying process to dry the cathode material from which the rare earth elements have been removed, and a fusing process to fuse the dried cathode material and then to recover the valent metals.

24. The recovering process for valent metals from refuse secondary batteries according to claim 23, characterized in that the oxidizing process to gradually oxidize the cathode material while bubbling air into the aqueous solution is constituted in a place prior to the drying process.

25. The recovering process for valent metals from refuse secondary batteries according to claim 23, characterized in that the fusing process is constituted with the addition of nickel as a starting metal into the material to be subjected to the fusing process.

26. The recovering process for valent metals from refuse secondary batteries according to claim 23, characterized in that the separated cathode material is one being crushed and separated by refrigerating the refuse secondary batteries with liquid nitrogen during the mechanical separation process.

**27.** The recovering system for valent metals from refuse secondary batteries according to claim 2, characterized in that the system comprises a rare earth elements removing means to remove rare earth elements after adding an acid in an amount of 0.1-2.5 times equivalent based on the weight of the separated cathode material separated by the separating means, which is required for dissolving the rare earth elements, a drying means to dry the separated cathode material from which the rare earth elements have been removed, and a fusing means to fuse the dried cathode material to recover the valent metals.

**28.** The recovering process for valent metals from refuse secondary batteries according to claim 1, characterized in that the process comprises a reduction fusing process to reduce and fuse the separated cathode material separated in the separating process after adding either carbon or plastic into the cathode material and a decarbonizing process to heat the separated cathode material under an oxidized atmosphere to oxidize and remove carbon contained in the valent metals either prior or following to the reduction fusing process, thereby recovering the valent metals.

**29.** The recovering process for valent metals from refuse secondary batteries according to claim 28, characterized in that the separated cathode material comprises a refuse anode material and refuse sintered nickel.

**30.** The recovering process for valent metals from refuse secondary batteries according to claim 28, characterized in that the process has a step of adding CaF2 in the decarbonizing process.

**31.** The recovering process for valent metals from refuse secondary batteries according to claim 28, characterized in that the oxidizing agent is either of oxygen or nickel oxide.

**32.** The recovering process for valent metals from refuse secondary batteries according to claim 28, characterized in that the separated cathode material is prepared by crushing and separation of the refuse secondary batteries following to the refrigeration of the refuse secondary batteries with liquid nitrogen during the mechanical separation process.

**33.** The recovering system for valent metals from refuse secondary batteries according to claim 2, characterized in that the system comprises a reduction fusing means to reduce and fuse the separated cathode material separated by the separating means after adding either carbon or plastic into the cathode material and a decarbonizing means to heat the separated cathode material under an oxidized atmosphere and to oxidize and remove carbon contained in the valent metals either prior or following to the reduction fusing process, thereby recovering the valent metals.

**34.** The recovering process for valent metals from refuse secondary batteries according to claim 1, characterized in that the refuse secondary battery is any of nickel-hydrogen secondary battery, refuse nickel-hydrogen secondary battery and nickel-cadmium secondary battery.

**35.** The recovering process for valent metals from refuse secondary batteries according to claim 1, characterized in that the valent metal is mainly consisted of hydrogen-occluded alloy, spumous nickel, nickel hydroxide and iron scrap.

**36.** The recovering process for valent metals from refuse secondary batteries according to claim 1, characterized in that the recovering process to recover valent metals is taken place under an atmosphere of an inactive gas.

# FIG. 1

Refuse secondary battery

| 1. Cooling process | ~101 |

| 2. First crushing process | ~102 |

| 3. Second crushing process | ~103 |

| 4. Water-rinsing process | ~104 |

Separated component

| 5. First sieving process | ~105 |

106~ | 6. Second sieving process |          | 7. Third crushing process | ~107

Under sieve ( – )     Over sieve ( + )

| 8. Third sieving process | ~108 |

Under sieve ( – )     Over sieve ( + )

Product 1
(Mainly MH alloy)

/ 109

| 9. Pulverizing process |

Product 4
(Mainly iron scrap)

| 10.Wet magnetic
separation process | ~110 |

Mag                    N-Mag

Product 2
(Mainly spumous nickel)

Product 3
(Mainly Nickel hydroxide)

# FIG. 2

```
                    ┌─────────────────────────┐
                    │ Refuse secondary battery │──11
                    └─────────────────────────┘
                                 │
                                 ▼
              ┌──────────────────────────────────┐
              │ Anode, cathode separating process │──201
              └──────────────────────────────────┘
                    │                        │
                    ▼                        ▼
     ┌────────────────────────────┐   ┌────────────────┐
     │ Separated cathode maternal │──12 │ Anode material │
     └────────────────────────────┘   └────────────────┘
             │                                 ┊
             │   ┌──────────────────────┐      ┊
             │   │ N i (Starter metal) + Ca │  ┊
             │   └──────────────────────┘      ┊
             ▼   ▼                             ┊
     ┌──────────────────────────────┐
     │ Fusing (tubular furnace) process │──202
     └──────────────────────────────┘
             │
             ▼
     ┌────────────────┐
     │  Valent metal  │──13
     └────────────────┘
```

# FIG. 3

Refuse nickel-hydrogen secondary battery 21

Plastic, paper, iron, etc. 22

Valent metal (Nickel hydroxide, Hydrogen-occluded alloy, Spumous nickel) 23

Mechanical separation process 301

Separation into anode material and cathode material

Separated anode material 25          Separated cathode material 24

Oxidizing process ~302

Fusing process ~303

Recovered metal 26

# FIG. 4

Refuse nickel-hydrogen secondary battery 21

Plastic, paper, iron, etc. 22

Valent metal (Nickel hydroxide, Hydrogen-occluded alloy, Spumous nickel) 23

Mechanical separation process 301

Separation into anode material and cathode material

Separated anode material 25          Separated cathode material 24

Nikel hydroxide treating proces ~304

Fusing process ~303

Recovered metal 26

# FIG. 5

Refuse secondary battery ~11

↓

Anode, cathode separating process ~401

Separated cathode material ~12          Anode material

↓

Acid-dissolving process ~402

↓

Adjusting oxygen concentration

Material for fusing

Fusing process ~403

Recovered metal

# FIG. 6

```
        ┌─────────────────────────┐
        │ Refuse secondary battery │~31
        └─────────────────────────┘
                     │
                     ▼
    ┌──────────────────────────────────┐
    │ Anode, cathode separating process │~501
    └──────────────────────────────────┘
           │                    │
           │                    │
  33 Separated anode material   Separated cathode material 32
                                          │
  Carbon (or plastics) 34                 │
           │                              │
           └──────────────┐               │
                          ▼               │
            ┌──────────────────────────┐  │
            │ Reduction fusing process │~502
            └──────────────────────────┘
                          │
                          │
                    Metal 1   C : 0.5~3%

Oxygen (including air), Nickel oxide (including anode)
                      │
                      └──────────┐
                                 ▼
                  ┌──────────────────────┐
                  │ Decarbonizing process │~503
                  └──────────────────────┘
                      │              │
                      ▼              ▼
  Doros (Oxidized rare earth)   35 Ni-Co recovered metal (C ≦ 200ppm)
```

# FIG. 7

( 1 ) Applicable example 1

Separated cathode material 32
(including refuse anode, refuse sistered nickel)

Reducing agent ( Other than metal Ca ) 34

repeat

502 — Reduction fusing process

Doros (Oxidized rare earth)    C - containing metal 1

Oxidizing agent (cf.Separated refuse anode)

503 — Oxidation, fusing,
decarbonizing process
(Oxidation fusing)

35 Ni-Co recovered metal containing low carbon    Doros

[To material for Ni-Co in MH alloy]

# FIG. 8

(2) Applicable example 2

Separated cathode material 32
(Including refuse anode, refuse sistered nickel)

Oxidizing agent (cf.Separated refuse anode)

503 ~ Oxidation, fusing, decarbonizing process (Oxidation fusing)

35 Ni-Co recovered metal containing low carbon    Doros

[Material for Ni-Co in MH alloy]

Reducing agent containing carbon

502 ~ Reduction fusing process

Doros (Oxidized rare earth)    C - containing metal

# FIG. 9

(3) Applicable example 3

Separated cathode material 32
(Including refuse anode, refuse sistered nickel)

Reducing agent other than Ca

502 — | Reduction fusing process |

Doros (Oxidized rare earth)   C-containing metal

Separated refuse anode

503 — | Oxidation, fusing, decarbonizing process (Oxidation fusing) |

Mixture of low carbon-containing metal and Doros

Ca metal

504 — | Ca - Reduction fusing |

Doros (CaO)   35 Ni-Co-Mm recovered metal containing low carbon

[To material for MH alloy]

# FIG. 10

(4) Applicable example 4

Separated cathode material 32
(Including refuse anode, refuse sistered nickel)

Oxidizing agent (cf. Separated refuse anode)

503 — Oxidation, fusing, decarbonizing process (Oxidation fusing)

35 Ni-Co recovered metal containing low carbon    Doros

[Material for Ni-Co in MH alloy]

Carbon-free reducing agent (cf. Al, H2)

502 — Reduction fusing process

35 Ni-Co recovered metal containing low carbon    Doros

[Material for Ni-Co in MH alloy]

## INTERNATIONAL SEARCH REPORT

| International application No. |
| --- |
| PCT/JP99/05830 |

### A. CLASSIFICATION OF SUBJECT MATTER
Int.Cl⁷ H01M10/54

According to International Patent Classification (IPC) or to both national classification and IPC

### B. FIELDS SEARCHED

Minimum documentation searched (classification system followed by classification symbols)
Int.Cl⁷ H01M10/54

Documentation searched other than minimum documentation to the extent that such documents are included in the fields searched
| | | | |
| --- | --- | --- | --- |
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1994-1999 |

Electronic data base consulted during the international search (name of data base and, where practicable, search terms used)
WPI/L [(S IC=H01M-010/54)*(S RECOVER?)]
JICST [BATTERY*COLLECTION]

### C. DOCUMENTS CONSIDERED TO BE RELEVANT

| Category* | Citation of document, with indication, where appropriate, of the relevant passages | Relevant to claim No. |
| --- | --- | --- |
| X | US, 5575907, A (Batenus Umwelt-Und Recyclingtechnologie | 1-3,10,34-36 |
| Y | GmbH & Co.), | 4-7,11-13,16, |
| | 19 November, 1996 (19.11.96), | 17,23,27 |
| | column 2, line 31 to column 3, line 2 | |
| | & EP, 652811, A1  & JP, 7-508927, A | |
| | 05 October, 1995 (05.10.95), | |
| | page 4, lower left column, line 20 to page 5, upper left | |
| | column, line 7 | |
| | | |
| | JP, 9-82371, A (MITSUI MINING & SMELTING CO., LTD.), | |
| | 28 March, 1997 (28.03.97), | |
| Y | column 1, lines 2-17 | 4-7 |
| | column 2, lines 36-49 | 23,27 |
| | (Family: none) | |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 December, 1999 (28.12.99) | 18 January, 2000 (18.01.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

International application No.

PCT/JP99/05830

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | US, 4769116, A (Engitec Impianti S.p.A), 06 September, 1988 (06.09.88), column 1, lines 38-51 & DE, 3700143, A1 & FR, 2592662, A1 & JP, 62-216179, A 22 September, 1987 (22.09.87), page 3, upper left column, line 11 to upper right column, line 4 | 4-7 |
| Y | JP, 10-158751, A (SUMITOMO METAL MINING CO., LTD.), 16 June, 1998 (16.06.98), Column 1, lines 2 to 9 (Family: none) | 11-13,16,17 |
| EA | DE, 19727880, A1 (Varta Batterie AG), 07 January, 1999 (07.01.99) (Family: none) | 1-36 |
| A | EP, 842304, A1 (Societe Nouvelle d'Affinage des Metaux SNAM), 20 May, 1998 (20.05.98) & DE, 69602198, E & FR, 2737344, A1 & WO, 97/5293, A1 | 1-36 |
| A | Pingwei Zhang et al., Hydrometallurgy, Vol. 47, (Netherlands), Elsevier (1998) pp. 259-271 | 1-36 |

Form PCT/ISA/210 (continuation of second sheet) (July 1992)